# EUROPEAN PATENT SPECIFICATION

(11) **EP 3 396 550 B1**
(45) Date of publication and mention of the grant of the patent: **04.08.2021**
(21) Application number: 17168868.2
(22) Date of filing: 28.04.2017
(51) Int. Cl.: G06F 9/54

(54) **ASYNCHRONOUS EVENT-BASED INSTRUCTION PROCESSING SYSTEM AND METHOD**
SYSTEM UND VERFAHREN FÜR ASYNCHRONE EREIGNISBASIERTE BEFEHLSVERARBEITUNG
SYSTÈME ET PROCÉDÉ DE TRAITEMENT D'INSTRUCTIONS BASÉES SUR DES ÉVÉNEMENTS ASYNCHRONES

(43) Date of publication of application: 31.10.2018
(73) Proprietor: Ebury Technology Limited, Cardinal Place London SW1E 5JL (GB)
(72) Inventor: Young, Toby, London SW1E 5JL (GB); Luque, Alvaro, London SW1E 5JL (GB); Paez, Antonio, London SW1E 5JL (GB)
(74) Representative: Ahmad, Sheikh Shakeel

(56) References cited:
- US-A1- 2017 091 642

## Description

### Field of the Invention

The present invention concerns an asynchronous event-based instruction processing system and method. More particularly, though not exclusively, the present invention concerns a processing architecture for processing asynchronous event records in real-time in order to match them to and confirm their data with expected event records for enabling conditional instruction processing to be carried out more quickly than has been possible previously.

### Background of the Invention

Conditional instruction processing systems are complex by their very nature. They are often designed to process large volumes of instructions from different instruction generation sources and also to process instructions for often a multitude of different actioning systems. There are many different types of actioning systems, which can use such conditional instruction processing systems covering a wide range of technologies and applications. One non-limiting example of such a system is seen in a distributed environmental control system, which controls the growing environment of crops. Rather than have a 100% controlled environment, which can be very expensive for large-scale applications, these systems can be used in conjunction with the environment to provide environmental control when required and which is conditional upon the current external environmental conditions that the actioning system supplements. Other areas of application include complex resource transfer between different data stores, which can be conditional upon certain events having occurred or an order of events having occurred (typically for maintaining high levels of security). In many cases, the actioning systems have multiple stages of processing to be carried out in order to finally execute an instruction.

Regardless of the actual application to which the actioning system applies, all of these systems have in common the need for a conditional instruction processing system. This type of conventional instruction processing systems relies on confirmation of externally-generated events having occurred, sometimes in a specified order, before the instruction can be processed to effect its execution or at least process the conditional aspect of the instruction so that it can then be executed (by the actioning system). These events are not under the control of either the instruction processing system or the actioning system in terms of when and if they occur. They can, in some non-limiting examples, be generated by sensors detecting a parameter has exceeded a threshold for a given amount of time. Also the parameters of the event are also not under the control of the systems. These events, which are embodied in a data record being received, describing the event, are hereinafter termed as 'asynchronous events'.

It is not necessary to describe the detailed aspects of the control system to which the instruction processing system couples because the present invention is directed to improvements in the detailed architecture of the conditional instruction processing system rather than the interface with or the processing of the control system itself.

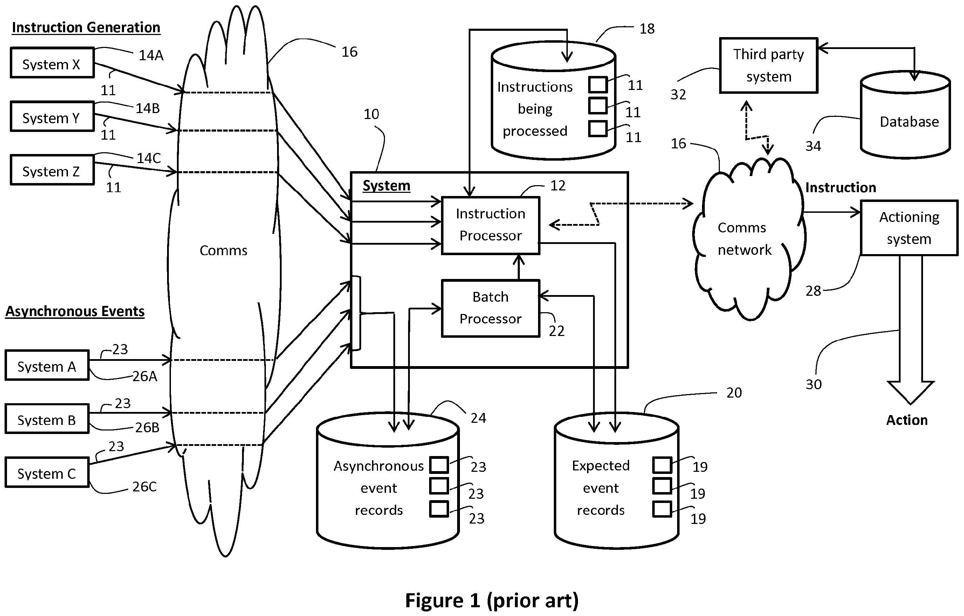

As has been mentioned above, key aspect of these types of known systems is that the processing of the instruction requires an expected event not under the control of the system to occur, and this event typically has several different parameters associated with it. Accordingly, for each instruction to be processed, the system creates an expected event which needs to be fulfilled by one or more actual asynchronous events in order for the instruction processing to occur. This typically involves matching incoming asynchronous event records to the expected internally-generated event record to determine if that event has actually occurred with the correct parameters. Also the parameters of the expected events have to be compared with and match those of the expected event record for confirmation of the occurrence of the correct event. Whilst the expected event record has not been matched, the instruction processing associated with that expected event record will not be carried out as the processing is conditional upon occurrence of the expected event. On occurrence of the expected event, as confirmed by the instruction processing system, the conditional requirements of the instruction can be considered fulfilled and the instruction execution can be triggered. A detailed explanation of how a typical conditional instruction processing system operates is provided later with reference to Figures 1 to 3B.

Such systems which use asynchronous events in order to undertake complex instruction processing are designed to operating on huge numbers of instructions and asynchronous events at any one time for processing efficiencies. For example, a typical processing system will have at any one time 500,000 pending instructions which are being processed. Continuing the environmental control system example mentioned above, inputs from many different types of sensors located over a geographically widespread area can be the asynchronous event generators which can be used to determine whether an instruction to turn on sprinkler systems in a set of regions can be executed. If the sensors indicate that the rainfall has been over a predetermined threshold over a predetermined time period for a given location, then the instruction will not execute as there is no need to turn on the sprinklers in that location. Also such instructions can also be interdependent on other events having occurred, for example another event may be that the ambient temperature may be over a threshold for several hours. This may be a further condition for the instruction to occur and may set one of the instruction parameters to a different value, in this example a parameter of the instruction, which extends to time period for the sprinklers to be activated in order to accommodate higher evaporation of the water during the operation of the sprinkler system.

Known conditional instruction processing systems are based on a batch-processing architecture which means that asynchronous event records are received over a time period and collated by the system for batch processing after the predetermined time period has expired. This architecture has particular advantages for conditional instruction processing which are explained in greater detail below.

An example of a known conditional instruction processing system using a batch processing architecture for handling asynchronous event records is now described with reference to Figures 1 to 3B.

Turning firstly to Figure 1, there is shown a known instruction processing system 10, which processes instructions 11 that are conditional upon the occurrence of asynchronous events. The asynchronous events are recognised by receipt of asynchronous event records each describing an asynchronous event. In this system, these asynchronous event records are received and collated by the system over a predetermined period of time (typically a few hours) and then subsequently processed in a batch.

As can be seen in Figure 1, the system 10 comprises an instruction processor 12 which is configured to receive instructions 11 (also termed instruction records) from one or more external instruction generation systems 14A, 14B, 14C. The instruction generation systems are typically configured to transmit instructions 11 to the instruction processor 12 via an external communications network 16.

After the instruction processor 12 receives instructions 11 from the instruction generation systems 14A, 14B, 14C, the processor may subsequently store and retrieve instructions to and from a data store 18 external to the system 10. The instruction processor 12 also generates an expected event record 19 which is associated with the instruction 11 being processed, and stores this in the expected events database 20. The expected event record 19 is, in most prior art implementations, almost identical to the instruction 11 being processed and so its structure will be understood from consideration of the structure of the instruction record. However, it may include one or more derived parameter fields, which are present to enable the expected event record to better match the asynchronous event record.

The system 10 further comprises a batch processor 22, which is coupled with the expected events database 20 as well as the instruction processor 12. The batch processor 22 is also configured to receive event records 23 from an external asynchronous event records database 24. This database 24 is configured to receive asynchronous event records 23 which notify the system of the occurrence of asynchronous events. These event records are received from multiple systems 26A, 26B, 26C via the external communications network 16 and are collated over a predetermined time period. Any such records 23 received by the database 24 are stored, as has been mentioned previously, in the asynchronous event records database 24. When the predetermined time period has elapsed, the collated event records 23 are transmitted to the batch processor 22 and a new collation period commences. The batch processor 22 is configured to determine whether the received collated asynchronous event records 23 can be matched to an expected event record 19 and if they can, then the batch processor 22 is configured to communicate this occurrence as a notification to the instruction processor 12. As the instructions 11 being processed by the system 10 are conditional instructions, this notification enables the received instruction to be now executable as the condition associated with the instruction has been fulfilled and the instruction processing system 10 can then send out the qualified instruction to the actioning system 28 for execution. If a match cannot be established for a collated asynchronous event record 23, the record is discarded as this event has no corresponding expected event record 19 and therefore has no impact on any of the conditional instructions 11 currently being processed.

Once the collated asynchronous event records 23 have been matched and checked against expected event records 19 relating to the instruction 11 to be processed, the instruction processor 12 is able to send a command signal via the communications network 16 to the actioning system 28 to execute an action. However before this can be done, the specific instruction 11 may require a final check to be carried out against an external third party system 32, for example an authentication system. In this case, before a command signal can be sent to the actioning system 28, a separate signal may be sent to the third party system 32 via the communications network 16 notifying the third party system 32 that a processed instruction to cause an action 30 to occur is ready to be issued. The third party system 32 may communicate with a connected external database 34 to verify that this action is expected by the third party or is authentic. Upon verification of this action from the database 34, a command signal may be sent back via the third party system 32 to the instruction processing system 10 via the communication network 16 notifying the instruction processing system 10 that the third party system has approved the execution of the action 30, which may now proceed. This authentication then triggers the transmission of the command signal corresponding to the processed instruction to the actioning system 28 for execution.

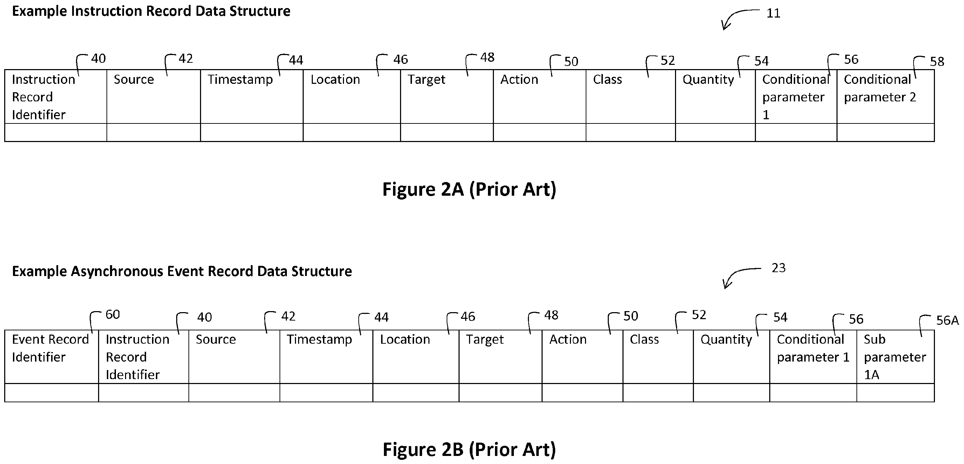

Figure 2A shows a data structure of an exemplary instruction record 11 for the known system of Figure 1. The data structure comprises a plurality of static parameters, which may be used to uniquely identify the instruction 11. As implied, these static parameters are fixed and do not vary as a function of time. The static parameters may comprise an instruction record identifier 40, which is assigned to the instruction on receipt by the instruction processor 12. The static parameters may further comprise a source identifier 42 indicating where the instruction has originated from as well as a timestamp 44 of when the instruction was first supplied. The static parameters may yet further comprise a location 46 that the instruction originated from, which may comprise a physical geographic location such as a country or city, or a virtual location such as an IP address. The static parameters may yet further comprise a target identifier 48, which indicates the target of the instruction, namely the identity of the entity or group of entities to whom the instruction is directed, for example this may be a group of environmental control subsystems within a geographic location. Additional parameters may include an action identification 50 denoting a type of action to be executed, for example reducing the humidity of a location to a given value. Further additional parameters shown may include a class identification 52 denoting a specific categorisation of the action, such as only use air conditioning devices to reduce the humidity. Yet further, the parameters may include a quantity 54 included in the instruction, such as the number of devices that are to be activated simultaneously to execute the action. Other conditional parameters 56, 58 may also be provided. The reason for providing so many discrete parameters for instruction execution relates to flexibility and compatibility with different types of actioning systems. In this case, the instruction generation systems 14A, 14B, 14C may not know the actual specific address or identity of a single device within a system that is to execute the action. Accordingly, by having a series of different descriptors at different levels it is possible for the actioning system to execute the instruction successfully without necessarily having given details of the exact number and location of devices it is controlling.

Turning to Figure 2B, there is shown a data structure of an exemplary asynchronous event record 23. As with the data structure of the instruction record 11 of Figure 2A, the event record data structure is comprised of a plurality of static parameters. In this embodiment, these parameters include the same parameters as those included in the instruction record of Figure 2A, namely an instruction record identifier 40, a source identifier 42, a timestamp 44, a location 46, a target identifier 48, an action identification 50, a class identification 52, a quantity 54 and another conditional parameter 56. This is because the asynchronous event is linked to the instruction 11 and needs to occur in order for the instruction to execute. Accordingly, matching of the asynchronous event to the instruction using their descriptive fields is key. The fact that matching of multiple fields is handled provides robustness to errors and corruption of data to single fields which would make single identifier matching more prone to error. Also as has been mentioned above, multiple descriptive fields are required because sometimes the unique identifier of the specific intended recipient of the instruction is unknown, making the use of single field identification of the target impossible. In addition to these parameters, an event record identifier 60 may also be assigned to the event record 23 upon receipt by the system 10 and storage in the asynchronous event record database 24. Furthermore, one or more sub-parameters 56A may also be present in the asynchronous event record 23, which is not present in the instruction record 11. As has been mentioned before, the expected event record 19 may have new fields (not shown) generated by the instruction processor 12 to enable better matching with the asynchronous event record 23. These new fields are compared against the one or more sub-parameters 56A of the asynchronous event record 23 to establish a match.

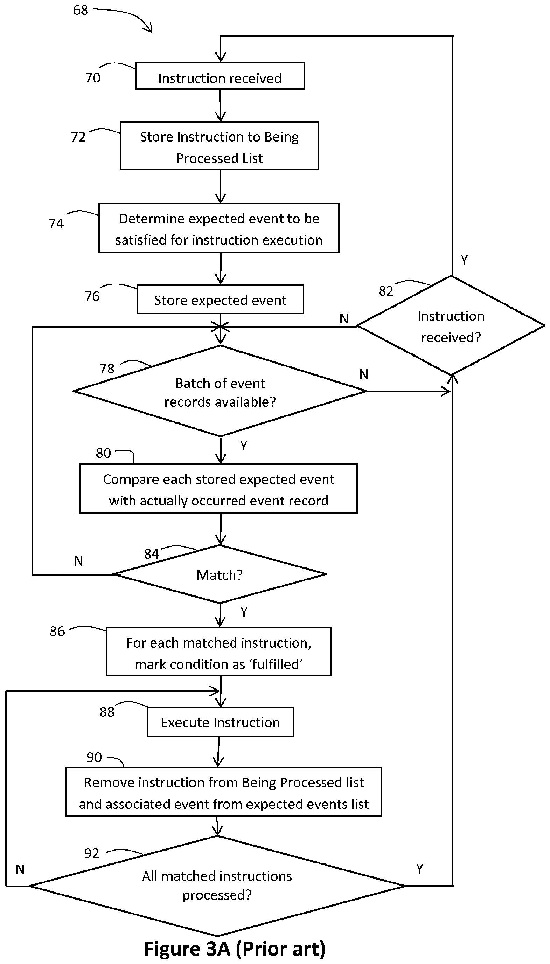

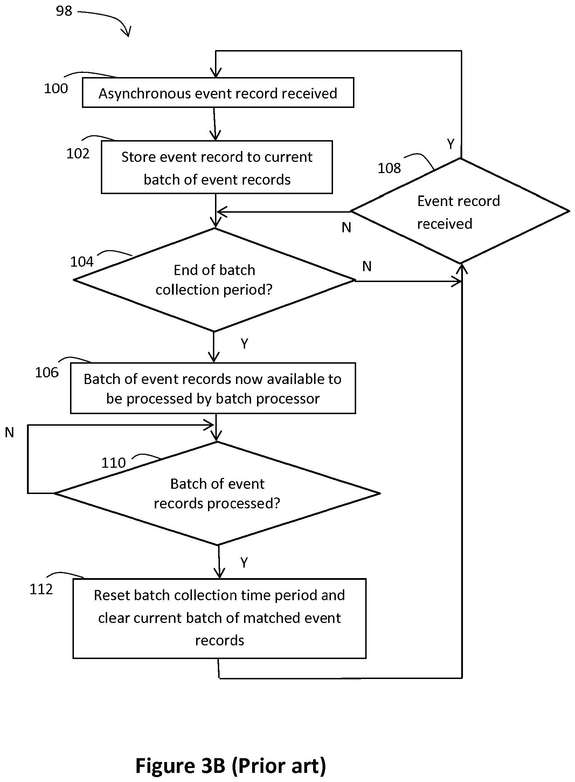

The corresponding parameters of the asynchronous event record 23 and the instruction record 11 may be used to help establish a match between an asynchronous event record and an instruction record (more specifically, between the asynchronous event record 23 and the expected event record generated by the instruction). This is achieved by comparing the two sets of parameters and establishing whether the parameters have the same values in each case. The matching procedure is discussed in greater detail with reference to Figures 3A and 3B.

Figure 3A shows the operation process 68 of the known instruction processing system 10 of Figure 1 in greater detail. The operation process 68 commences operation with an instruction being received at Step 70 by the instruction processor 12. The instruction processor then stores, at Step 72, the instruction in the 'being processed list', which is maintained in the data store 18. Subsequently, the instruction processor 12 determines, at Step 74, the expected event to be satisfied for the instruction execution to be carried out. The expected event is expressed as a set of parameters in the corresponding newly created expected event record 19 and this is then stored, at Step 76, in the expected event data store 20.

The operation process 68 then determines, at Step 78, whether a batch of asynchronous event records 23 is available 78, where a batch of collated events is made available by the asynchronous event data record store 24 after a predetermined time period has elapsed, as described above with reference to Figure 1. If a batch of event records is available, then the batch processor is updated with the list of expected event records 19 in the data store 20 and compares, at Step 80, each stored expected event record 19 with each asynchronous event which actually occurred according to the batch of asynchronous event records, to determine if there is a match (see below). If no batch of asynchronous event records 23 is available, then the operation process 68 determines, at Step 82, if a new instruction has been received. If it has, then the process begins again, at Step 70, as described above. If it has not, then the operation process checks again at Step 78, if a batch of event records is available.

Following the comparison at Step 80, the operation process 68 determines, at Step 84, if there is a match between each stored expected event record 19 and the asynchronous events which have occurred according to the batch of asynchronous event records 23. If no matches are found with any of the asynchronous event records 23, then the operation process 68 returns to Step 78 and waits for a new batch of event records to be available. If a match (or multiple matches) is determined between any of the asynchronous event records 23 and the expected event records 23, then the batch processor 22 notifies the instruction processor 12 of the match, which then subsequently updates at Step 86, the conditional requirement of the instruction to 'fulfilled'. The instruction processor 12 may then effectively execute, at Step 88, the instruction by sending a control signal to the actioning system 28. The instruction record 23 is then removed, at Step 90, from the 'being processed' list and the associated event record 19 in the 'expected event' list is also deleted 90. At step 92, the system then determines, at Step 92, if further instructions were marked as fulfilled in accordance with Step 86. If they were, the operation process proceeds similarly to effectively execute that instruction, following the procedure beginning at Step 88. If there are no further instructions to be executed, the operation process 68 waits for new instructions, as described above at Step 82.

Figure 3B shows the process 98 by which the system 10 receives and collates the asynchronous event records in the asynchronous events records data store 24, before making them available to the batch processor 22. The process 98 begins when an asynchronous event occurs and an asynchronous event record 23 is received, at Step 100, by the system 10. Upon this receipt, the asynchronous event record is stored, at Step 102, as part of a current batch of asynchronous event records 23. At this point, the asynchronous event record 23 may also be assigned a unique event identifier 60 so that it may be referenced for processing. Following this storage, the process 98 continues with the system 10 determining at Step 104, whether or not the predetermined time associated with the batch creation period has elapsed. If such a time period has elapsed, the batch of event records 23, which had been collected during that time period, are made available, at Step 106, for processing by the batch processor 22. If the time period has not yet elapsed, the process 98 continues with the system 10 determining, at Step 108, if another asynchronous event record 23 has been received. If it has, the system 10 stores the asynchronous event record 23 in the asynchronous data store 24, as described above at Step 100 and 102. If it has not, the process 98 continues with the system repeatedly determining if the batch collection period has ended as described at Step 104, until either the batch collection period has ended so the process may move to Step 106, or until a new asynchronous event record has been received (as per Step 108).

Following the batch of events being made available for processing, each event record 23 in the batch is then processed by the batch processor 22, which attempts to match each asynchronous event record 23 with an expected event record 19 in the expected event records data store 20. Following each event record being processed, the system 10 determines, at Step 110, whether any more asynchronous event records in the batch need to be processed, i.e. whether the whole batch of asynchronous event records has been processed. If there are any unprocessed event records in the batch, the process 98 returns to Step 110 to process these events. If the whole batch of events has been processed, whether they have been matched or not, the process 98 then resets at Step 112, the batch collection time period and clears the current batch of asynchronous event records, i.e. all event records in the batch which have been matched are removed from the batch. Also any events which are unmatched are deleted, at Step 112, as they are not associated with any of the current instructions being processed. The process 98 then waits at Step 108 for more asynchronous event records to be received to be processed at a later time, as described above.

The batch processing architecture enables all of the asynchronous event records to be processed efficiently and for the overall system to run effectively. It also means that the system can be readily scalable as the processing power required is much more predictable. Additional advantages of this approach are that the architecture is resilient to the effects of receiving a high concentration of asynchronous event records in a short period of time because the event records are simply placed in a buffer awaiting the batch processing period to finish before trying to process them. Another advantage is that if multiple asynchronous events need to occur before the instruction can be processed, then the natural collating characteristic of batch processing provides a time period over which those multiple event records can be received and be processed together to determine whether the instructions related to those multiple event records can be carried out. A further advantage is that in some cases matching incoming event records to expected event records is helped by the process of elimination as more and more payments events of the batch get matched, the higher the probability that the remaining payment events will also get matched as there is a smaller set of possible expected results to match to. In fact (assuming all of the events have occurred), the last asynchronous event record 23 of a batch will in some systems always get matched as it only has one possible expected event record 19 left to match to. This process is also comparatively easy to implement as many of the constraints are predefined.

These above-described advantages have meant that instruction-processing systems 10 which have a conditional event-based requirement have nearly always used a batch-processing architecture. However, despite these advantages, there is one significant drawback to use of a batch-processing architecture, namely that the instruction processing by virtue of the processing architecture, simply cannot operate in real time. In systems where the speed of execution of each individual instruction is critical, any saving in time (no matter how small) in the processing of the instruction can result in a significant processing benefit. In these cases, the use of systems employing the batch processing architecture is disadvantageous. The essential time period required to collect event records, typically is in the order of hours of time, provides this delay which cannot be mitigated when using this approach. In the past, these types of systems have simply had to accept the inherent time delay of batch processing architecture because of the other advantages when dealing with the unpredictable nature of asynchronous events records.

The present invention has been devised against this backdrop and seeks to obviate at least some of the above-described problems with batch-based architecture for instruction processing systems. More particularly, the present invention aims to provide a real-time instruction processing system which provides at least some of the benefits of batched-based architecture and provides a great deal of flexibility in the type of instruction processing which can be carried out.

US 2017/091642 A1 discloses relevant prior art.

### Summary of the Invention

The invention provides a system and a method as defined in the appended claims.

According to one aspect of the present invention there is provided an asynchronous event-based instruction processing system for processing conditional instruction records continuously in real-time, each conditional instruction record having one or more associated asynchronous event records, which need to be received by the system for an instruction of the conditional instruction record to be executed, the system comprising: an adaptive queuing system for receiving a plurality of asynchronous event records and temporarily storing the same in a queue, each asynchronous event record pertaining to an event occurring asynchronously to the generation of the associated conditional instruction record to which the asynchronous event record relates, the adaptive queuing system comprising a queue length monitoring module for monitoring the length of the queue of asynchronous event records and providing queue length information to an event matching processor; an instruction processor for receiving a conditional instruction record having a plurality of parameters, the instruction processor being arranged to generate an expected event record using at least some of the parameters of the received conditional instruction record, wherein the expected event record comprises static parameters which remain static throughout the processing of the conditional instruction record and variable parameters which can vary during the processing of the conditional instruction record; the event matching processor for processing each of the received asynchronous event records to determine if they correspond to any of the received conditional instruction records; the event matching processor comprising: a plurality of processing resources which operate in parallel and a resource allocation network, the resource allocation network being arranged to access a proportional amount of the available processing resources dependent on the size of the queue as determined by the queue length information; and an adaptive logic tree data structure arranged to be used concurrently by the processing resources for matching the plurality of received asynchronous event records with the parameters of each of the expected event records, the adaptive logic tree data structure comprising a plurality of nodes, including at least one static node representing a static parameter of an expected event record and at least one variable node representing a variable parameter of an expected event record; wherein the event matching processor is arranged to indicate to the instruction processor if the events specified by any expected event records have occurred as determined by the presence of one or more correctly matched asynchronous event records; and a recycling engine for recycling any asynchronous event records which have been determined using the adaptive tree structure not to match an expected event record at a current moment in time, the recycling engine placing the asynchronous event record back in the queue of the adaptive queuing system; wherein the system is arranged to continually create expected event records as conditional instruction records are received and to match these continuously with asynchronous event records present in the system which have not been matched to the expected event records.

The present invention is a new approach to an asynchronous event processing architecture which is actually counterintuitive to the current conventional thinking. The present architecture is more complicated but operates in real time and is better able to adapt to complicated (adaptive) rules for matching and checking. This enables the present invention to run continuously and therefore be more configurable and flexible as well as actually matching faster and more reliably than previous batch-based systems.

Three aspects of the present invention provide this ability for real-time processing. The first aspect is the real-time matching of an asynchronous event to an expected event via the adaptive logic tree. The logic tree assesses one or many parameters of the asynchronous event at each node which determines which branch of the logic tree the asynchronous event is to be moved to for further consideration. It is to be noted that some of the parameters vary with time and/or events and so these parameters are not static. This means that multiple traversal of the logic tree by the same asynchronous event can result in different matching outcomes. If the asynchronous event record gets to the end (a leaf) of the logic tree it can be considered to have been uniquely matched to an expected event record. If it does not, exiting the logic tree at a higher position than possible, it can be considered as not matched and can be recycled.

Recycling instructions, which have not been matched, is the second key aspect of the present invention as it is key to real-time processing. This process enables the matching conditions in the logic tree to change before the same asynchronous event record is put through the logic tree again to see if it can be matched to an expected event record. In some embodiments, the logic tree may well remember how far the instruction got through the logic tree last time and can use some of this information for the subsequent traversal of the tree as a recycled instruction in an optimised manner.

The third key aspect relates to adaptive processing of events received asynchronously. Here the input queue of adaptive queuing system is monitored and if there is a large number of events received at the same time (increasing the length of the queue), then the event matching processor activates greater resources (more processors operating multiple threads) to cope with the increased processing load. As the input queue becomes shorter, processing resources can be diverted away from the event matching process to other parts of the system as required. This is an efficient way of managing workload where there are asynchronous events being received by the system without relying on batch processing.

Preferably, the event matching processor further comprise a results processor for determining the results of an asynchronous event record parsing of the adaptive logic tree and transmitting a matched result to the instruction processor or an unmatched asynchronous event record to the recycling engine. Also the event matching processor may further comprise a matching history module for referencing and logging the processing of an asynchronous event record through the adaptive logic tree and storing the results to a matching history data store. In this case, the results processor can be arranged for every asynchronous event record which fails to be matched to an expected event record, to access the matching history module and determine using the stored histories of previously failed asynchronous event records, whether a combination of a current asynchronous event record and any of the previously failed asynchronous event records would lead to a match with an expected event record. Furthermore, the results processor may be arranged to indicate to the instruction processor, a combination of asynchronous event records which match the expected event record, and the instruction processor may be arranged to mark the corresponding conditional instruction record as fulfilled such that it can subsequently be executed.

Preferably the instruction processor may comprise an expected event generator arranged to create event records including conditional parameters which only to be considered once other events matching other specified parameters have occurred, and the instruction processor may comprise an adaptive tree configuration module which is arranged to configure adaptive tree with the conditional parameters only once the specified conditional events pertaining to those parameters have occurred.

The instruction processor may in some embodiments comprise an instruction deconstructor which is arranged to deconstruct a conditional instruction record into a plurality of different sub-actions which are to be carried out to execute that instruction and, for at least one of these selected sub-actions, to determine parameters relating to expected events to be used for generating a corresponding expected event record. It is also possible for the instruction processor to further comprise an instruction execution engine and the instruction deconstructor may be arranged to forward a subset of the different sub-actions of the instruction record to the instruction execution engine to be executed unconditionally prior to matching of the expected event record.

This aspect of the present invention enables the system to be flexible but also to provide speed of end-to-end execution. Accordingly 'pre-processing' of parts of a conditional instruction can be carried out prior to occurrence of the predetermined asynchronous event associated with that instruction. This When this expected event occurs, the final step of the multiple sub-action instruction can be actioned and completed. This 'pre-processing' of parts of the instruction before the event occurs makes the execution of actions faster. Also because of the flexible way in which the system effects matching, it is more reliable than existing systems to get higher percentages of correctly matched instructions.

The instruction processor may comprise an expected event generator arranged to create expected event records including conditional parameters which only to be considered once other events matching other specified parameters have occurred, and the instruction processor may comprise an adaptive tree configuration module, which is arranged to configure the adaptive tree with the conditional parameters only once the specified conditional events pertaining to those parameters have occurred.

Preferably the instruction processing system further comprises an expected event record data store for storing expected event records created by the expected event generator.

The adaptive queuing system may also comprise a queue management module for managing updating of the queue of asynchronous event records and for reading out a plurality of the asynchronous event records to the event matching processor on demand. In such an embodiment, the queue management module may comprise a queue updating module which receives the asynchronous event records and populates the queue in a First in First Out (FIFO) manner and which receives recycled asynchronous event records from the recycling engine to place in the queue, and a queue read out module for reading out a plurality of asynchronous event records concurrently to the resource allocation network of the event matching processor.

Preferably, the adaptive tree is arranged to be configured in accordance with a current conditional state of the conditional event records being matched, and to change to a different configuration if some predetermined parameters of the conditional event records have been matched to asynchronous event records which change the conditional state of the conditional event records.

The plurality of processing resources may be comprised of a plurality of assignable processing resource channels which are each configured to be switched in or out depending on the configuration determined by the resource allocation network.

The present invention also extends to a method of processing conditional instruction records continuously in real-time, each conditional instruction record having one or more associated asynchronous event records, which need to be received for an instruction of the conditional instruction record to be executed, the method comprising: receiving a plurality of asynchronous event records and temporarily storing the same in a queue, each asynchronous event record pertaining to an event occurring asynchronously to the generation of the associated conditional instruction record to which the asynchronous event record relates; monitoring the length of the queue of asynchronous event records and providing queue length information for subsequent processing; receiving a conditional instruction record having a plurality of parameters; generating an expected event record using at least some of the parameters of the received conditional instruction record, wherein the expected event record comprises static parameters which remain static throughout the processing of the conditional instruction record and variable parameters which can vary during the processing of the conditional instruction record; processing each of the received asynchronous event records to determine if they correspond to any of the received conditional instruction records; the processing step comprising: arranging a resource allocation network to access a proportional amount of the available processing resources of a plurality of processing resources which operate in parallel, using the size of the queue as determined by the queue length information; and using an adaptive logic tree data structure, arranged to be used concurrently by the processing resources, for matching the plurality of received asynchronous event records with the parameters of each of the expected event records, the adaptive logic tree data structure comprising a plurality of nodes, including at least one static node representing a static parameter of an expected event record and at least one variable node representing a variable parameter of an expected event record; indicating to the instruction processor if the events specified by any expected event records have occurred as determined by the presence of one or more correctly matched asynchronous event records; and recycling any asynchronous event records which have been determined using the adaptive tree structure not to match an expected event record at a current moment in time, the recycling step placing the asynchronous event record back in the queue; wherein the method continually creates expected event records as conditional instruction records are received and matches these continuously with asynchronous event records present in the system which have not been matched to the expected event records.

For brevity, it will be understood that features, functions and advantages of different aspects of the present invention may be combined or substituted where context allows. For example,

### Brief Description of the Drawings

In order that the invention may be more readily understood, reference will now be made, by way of example, to the accompanying drawings in which:
Figure 1 is a schematic block diagram showing a known instruction processing system which uses a batch-based processing architecture for processing asynchronous event records;
Figure 2A is a schematic block diagram showing an example of a known instruction record data structure showing its parameters which are used for matching and processing of the instruction record;
Figure 2B is a schematic block diagram showing an example of a known asynchronous event record showing its parameters which are used for matching and processing of the event record;
Figure 3A is a flow diagram showing a method of processing received instructions by the known instruction processing system of Figure 1;
Figure 3B is a flow diagram showing a method of processing received asynchronous event records by the known instruction processing system of Figure 1;
Figure 4 is a schematic block diagram showing an instruction processing system for processing asynchronous event records according to an embodiment of the present invention;
Figure 5A is a schematic block diagram showing an example of an instruction record data structure showing its parameters which are used for matching and processing of the instruction record by the system shown in Figure 4;
Figure 5B is a schematic block diagram showing an example of an expected event record data structure showing its parameters which are used for matching and processing of the instruction record by the system shown in Figure 4;
Figure 5C is a schematic block diagram showing an example of an asynchronous event record showing its parameters which are used for matching and processing of the event record by the system shown in Figure 4;
Figure 6A is a flow diagram showing a method of processing received instructions by the instruction processing system of Figure 4;
Figure 6B is a flow diagram showing a method of processing received asynchronous event records by the instruction processing system of Figure 4;
Figure 7 is a schematic block diagram showing an adaptive queuing system of the instruction processing system of Figure 4;
Figure 8 is a flow diagram showing a method of operation of the adaptive queuing system of Figure 4;
Figure 9 is a schematic block diagram showing an event matching processor of the instruction processing system of Figure 4;
Figure 10A is a flow diagram showing a method of operation of the event matching processor of Figure 4;
Figure 10B is a flow diagram showing a method of operation of the event matching processor of Figure 4 in processing recycled event records; and
Figure 11 is a schematic block diagram showing an instruction processor of the instruction processing system of Figure 4.

### Detailed Description of Exemplary Embodiments

Specific embodiments are now described with reference to the appended figures.

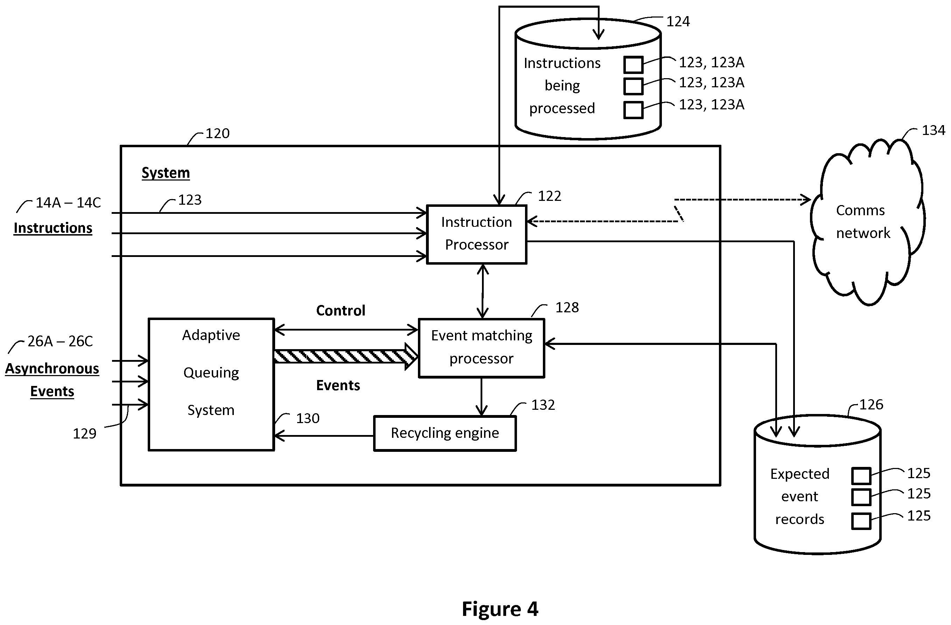

Referring now to Figure 4, there is shown an instruction processing system 120 according to a first embodiment of the present invention, which processes instructions (instruction records) 123, which are conditional upon the occurrence of asynchronous events, namely the receipt of asynchronous event records. The system operates in an environment which is the same as that described previously in relation to Figure 1. In this regard and for the sake of brevity, the following description will only focus on the differences between the instruction processing system 10 of Figure 1 and of the current embodiment shown in Figure 4. The term 'expected events' and 'expected event records' are hereinafter used synonymously as are the terms 'asynchronous events' and 'asynchronous event records'.

As can be seen from Figure 4, the instruction processing system 120 is a real time operation system. It comprises an instruction processor 122 which receives instructions 123 from instruction generation systems (14A, 14B, 14C). The instruction processor can store and retrieve instructions 123 to a data store of instructions being processed 124. The instruction processor 122 generates an expected event record 125, which is associated with the instruction 123 being processed and stores this in the expected events records data store 126. An event matching processor 128 is coupled to the instruction processor 122, which checks and matches asynchronous event records 129 received from an adaptive queuing system 130 with expected event records 125 stored in the expected event data records store 126. The event matching processor 128 is configured to operate efficiently by the instruction processor 122 and essentially determines whether a received event record 129 can be matched and checked to an expected event record 125. If it can, then this is communicated back to the instructions processor 122 and the instruction 123 can proceed to be actioned. If, however, it does not match any expected event record 125, then it is sent to the recycling engine 132 which can send the unmatched asynchronous event record 123 back to the adaptive queuing system 130 to be considered for processing again.

The adaptive queuing system 130 is provided to handle incoming asynchronous events 123. These events are received from a different external system 26A, 26B, 26C as has been explained previously in relation to Figure 1. Rather than event records being stored for batch processing at a given time as per the prior art system of Figure 1, the received event records 129 are placed in a queue for immediate processing if possible. Where a high volume of asynchronous event records 129 are received in a short period of time, the adaptive queuing system 130 queues the incoming event records for processing as soon as possible. The queuing system 130 is adaptive because the processing resources used for processing the event records 129 can automatically be increased with an increasing number of events waiting to be processed in the queue. This means that the processing power of the system is tailored to the demand placed on the system by the number of incoming asynchronous event records. Event records 129 which are not correctly matched at a given moment in time are recycled back to the adaptive queue and reprocessed. Whilst there will inevitably be a short time delay between the first processing of a given event record and its next processing, this time frame is short but does allow enough time for other events to be processed and for conditional parameters of the event record 129 or instruction to change, thereby facilitating a better chance of a successful processing in subsequent iterations of processing of the same event record 129.

Once received asynchronous events have been matched and checked against expected event records relating to the instruction being processed, the instruction processor 122 can send a command signal via the communications network 134 to the actioning system 28 to execute an action. As with the prior art system 10 this may also require an intermediate stage of requiring a third party system 32 to authenticate the proposed action before it is executed.

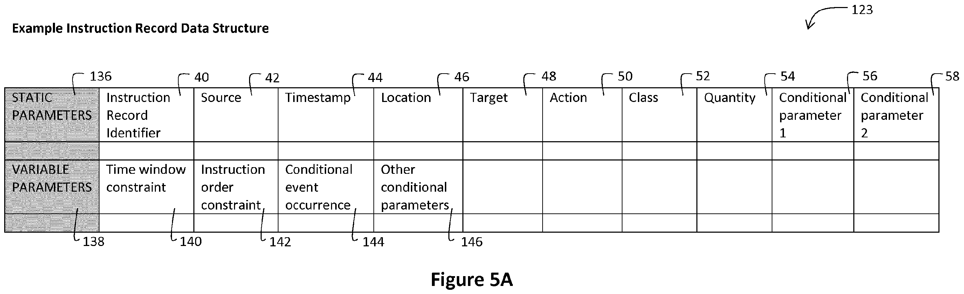

Turning now to Figure 5A there is shown a data structure of an exemplary instruction record 123. The instruction record has a data structure which is similar to that of the prior art systems shown in Figure 2A. However rather than just having static parameters 136, namely parameters which do not change value during processing, the data structure includes variable parameters 138 which change over time or with the occurrence of events. The static parameters 136 include an instruction record identifier 40, which is given to the instruction 123 on receipt by the instruction processor. The static parameters 136 may further comprise a source identifier 42 indicating where the instruction has originated from as well as a timestamp 44 of when the instruction was first supplied. The static parameters may yet further comprise a location 46 that the instruction originated from, which may comprise a physical location such as a country, or a virtual location such as an IP address. The static parameters may yet further comprise a target identifier 48 that indicates the target of the instruction 123. Additional static parameters 136 may include an action identification 50 denoting a type of action to be executed, for example, continuing the earlier environmental control example a power toggle action for the sprinklers or a filling action for water reservoirs. Further additional static parameters 136 shown may include a class identification 52 denoting a specific categorisation of the action, such as indicating a specific subset of sprinklers to be turned on within the action. Yet further, the static parameters may include a quantity 54 included in the instruction, such as including how long the sprinklers should be turned on for. Other conditional static parameters 56, 58 may also be provided.. The variable parameters 138 can include a time window constraint 140, where an event may only be considered for matching at certain dates or times, and where these dates or times may alter depending on the occurrence of other events. For example, a first event may only be considered for matching between the hours of 09:00 - 17:00 on weekdays, but this may be increased to between 09:00 - 18:00 where a second event has occurred at 16:59, and the first event may be expected to occur in close proximity to the second event. Another variable parameter may be an instruction order constraint 142, where a first event may only be considered for matching when a series of related events have occurred, and in a predetermined order (i.e. event C may only be considered for matching once event B has been determined to occur, which itself is dependent on event A occurring). Similarly, an additional variable parameter in this data structure may be a conditional event occurrence constraint 144, where a first event is only considered for matching if previous events have been determined to occur, but in no particular order. Other conditional variable parameters 146 may also be provided.

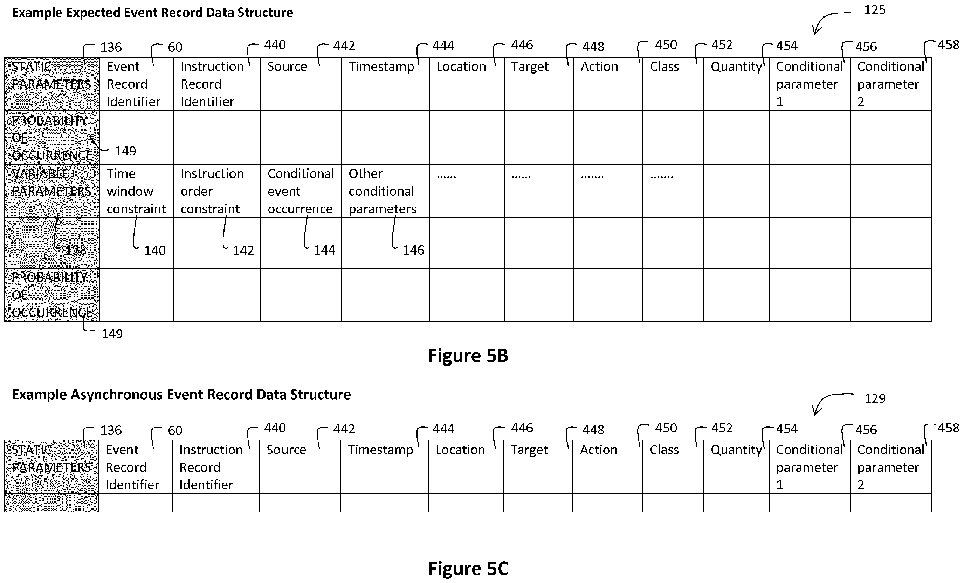

Turning to Figure 5B, there is shown a data structure of an exemplary expected event record 125 for the present embodiment, which is created by the instruction processor 122 in response to the receipt of an instruction record 123. As with the data structure of the instruction record of Figure 5A, the expected event record data structure 125 is comprised of a plurality of static and variable parameters. The parameters are configured such that the expected event record 125 can be associated with the corresponding instruction record 123, and also such that the event can be matched to an asynchronous event record 129, which is described in further detail below. These parameters are comprised of the same parameters as those included in the instruction record of Figure 5A, namely an instruction record identifier 440, a source identifier 442, a timestamp 444, a location 446, a target identifier 448, an action identification 450, a class identification 452, a quantity 454, a time window constraint 140, an instruction order constraint 142 and a conditional event occurrence constraint 144. Additional static and variable conditional parameters 146, 456, 458 may also be provided. However, whilst the parameter categories themselves are similar, the parameters may comprise different data than its corresponding instruction record 123. This occurs as the expected event parameters generated by the instruction processor 122 do not necessarily need to be identical to the instruction parameters. For example, the expected event may originate from a different source than the first instruction and so, in this case, the source parameter 42 in the instruction record 123 and in the expected event record 125 would comprise different data. In addition to the above corresponding parameters, an event record identifier 60 may also be given to the event upon receipt by the expected event record database 126.

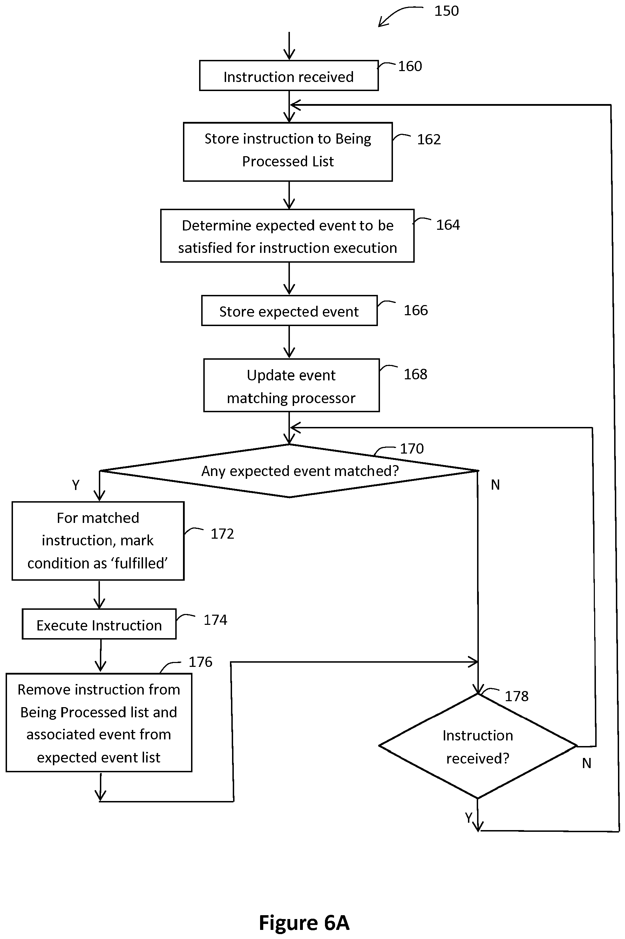

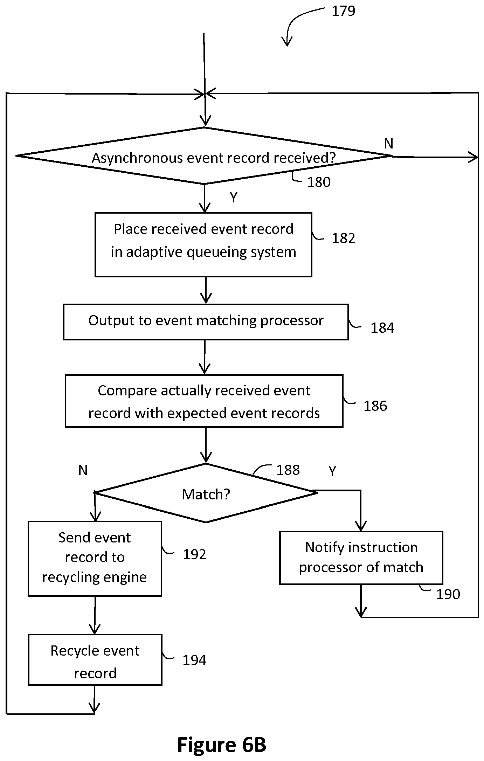

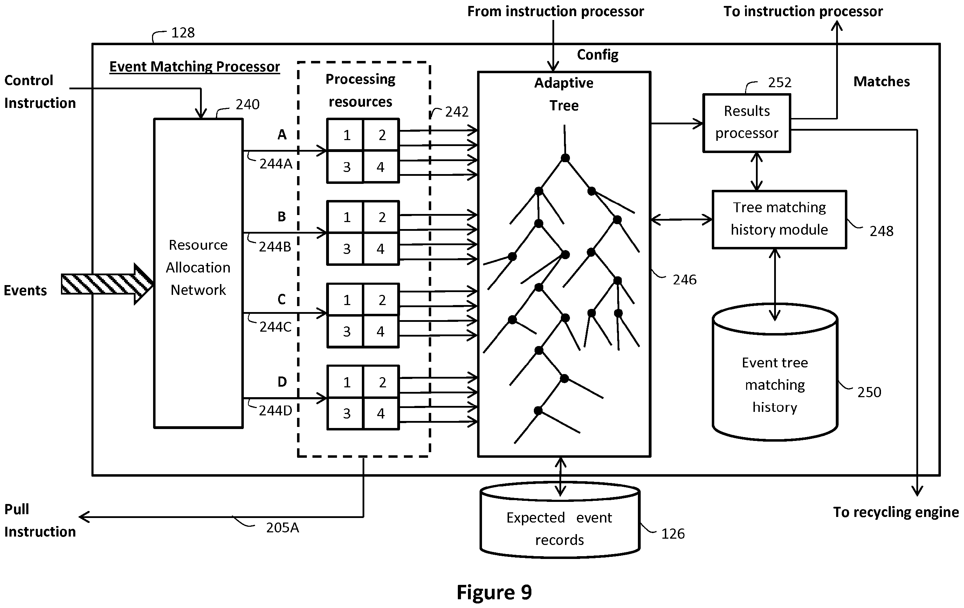

Furthermore, when an expected event record 125 is created by the instruction processor 122, each relevant variable in the record may be assigned fixed and variable probabilities of occurrence 149, which indicate the likelihood of that parameter being matched to an asynchronous event record 129. These probabilities 149 may be used in the matching process as a factor in deciding which expected events 125 the event matching processor 128 will attempt to match to an asynchronous event 129, and may also affect the configuration of the adaptive tree 246 (which is discussed in further detail later with reference to Figure 9). For example, if a parameter has an associated probability 149 of zero for being able to be matched, then the event matching processor would not attempt to match this particular parameter. This may be realised by the parameter being a node in the adaptive tree 246 but not being accessible at that moment in time. Similarly, if a parameter has an associated high probability of being able to be matched, then the event matching processor 128 would prioritise this parameter when attempting to match it to an asynchronous event record 129. This may be realised by the parameter being a node in the adaptive tree 246 at a particular location which reflects its high chances of being matched. The associated probability 149 may be configured to be conditional, based either on external factors (such as the time of the attempted matching) and/or on the outcome of the matching of other parameters in the event record. The matching method is discussed in greater detail below with reference to Figures 6A and 6B.

Figure 5C shows a data structure of an exemplary asynchronous event record 125 for the present embodiment, which is created by an asynchronous event system 26A, 26B, 26C in response an asynchronous event occurring. The asynchronous event record data structure is comprised of a plurality of static parameters. The parameters are configured such that the asynchronous event record 129 can be matched to an expected event record 125, which is described in further detail below. These parameters are comprised of the similar parameters as those included in the expected event record of Figure 5B, namely an instruction record identifier 440, a source identifier 442, a timestamp 444, a location 446, a target identifier 448, an action identification 450, a class identification 452 and a quantity 454. Additional static conditional parameters 456, 458 may also be provided. The corresponding parameters of the expected event record 125 and the asynchronous event record 129 may be used to establish a match between an asynchronous event and an instruction record (more specifically, the corresponding expected event 125 generated by the instruction). This is achieved by a method of comparing the two sets of parameters using the adaptive tree 246 (described below) and establishing whether the asynchronous event is the same as that required and specified by the instruction record. The matching procedure for the present embodiment is discussed in greater detail with reference to Figures 6A and 6B.

Figure 6A shows a method 150 of operation of the instruction processing system 120 in detail. The system 120 commences operation with an instruction being received, at Step 160, by the instruction processor 122. The instruction processor 122 then stores, at Step 162, the instruction 123 in the 'being processed list', which is maintained in the data store 124. Subsequently, the instruction processor 122 determines, at Step 164, the expected event 125 to be satisfied for the instruction execution to be carried out. The expected event is expressed as a set of parameters in the corresponding newly created expected event record 125 and this is then stored, at Step 166, in the expected event data store 126. The instruction processor 122 then updates, at Step 168 the matching processor 128 with a new configuration relating to the new expected event 125 (described in detail later).

The event matching engine 128, once updated with the configuration of the new expected event record 125, functions to check and match, at Step 170, the next incoming asynchronous event record 129 to the expected event records 125. If any expected event record 125 is found to have been received and has also been checked to have the correct parameter values in its fields, then the matching processor 128 indicates this to the instruction processor 122. This triggers the status of the conditional requirement for the instruction to be changed, at Step 172, to 'fulfilled.' The instruction (or at least a final part of it - see below) is executed at Step 174. The instruction is then removed, at Step 176, from the 'being processed' list and the associated event record 125 in the expected event list is also deleted, again at Step 176.

Instruction execution in the present embodiment typically involves several stages. Unlike the prior art systems when instruction execution is commenced once specified asynchronous events have occurred, the present embodiment breaks down the instruction into a series of discrete actions which need to be carried out and executes all but one of these as soon as possible. The last discrete action is held back until the expected asynchronous event has occurred and it is only then that the command signal is sent to the actioning system to actually action the event. Whilst this does mean that some instructions which do not have the requisite asynchronous event occur, have to be unwound at some later point in time, the vast majority of instructions which are executed, are executed more quickly than was possible with the prior art systems as only one final stage of the instruction has to be carried out for the action to actually take place. For example in the environmental control system example described earlier, if the conditional action is to turn on the sprinklers for a predetermined period of time, the instruction processor 122 may send out certain pre-execution commands which prepare the sprinkler system to be ready for execution of the action when the condition is fulfilled. For example the pre-execution action could be to check the levels of water available for the sprinkler system and to top up the reservoirs as required or to run some diagnostic tests on the sprinkler system in preparation for when the command to activate the sprinkler system is actioned. In practice, these pre-execution commands can either be pre-programmed into the instruction processor 122 or can be specified within the parameters of the received instruction record 123.

The method of instruction processing 150 then continues with the instruction processor 122 then waiting for the next instruction to be received, at Step 178, and if no instruction has been received, then the method 150 returns back to the event matching engine 128 determining if any expected events 125 have been matched at Step 170. This is also the case if no expected event 125 has been matched by the event matching engine 128 at an earlier stage. However, once a new instruction 123 has been received, the method of instruction processing 150 continues from the new instruction 123 being stored in the 'being processed' list as has already been described above.

Figure 6B shows a method 179 of operation of the adaptive queuing system 130 and the event matching processor 122 in greater detail. The method of operation 179 commences with the determination, at Step 180, of whether a new asynchronous event record 129 has been received. This is continually checked by the adaptive queuing system 130 until a new event record 129 has been received. The event record 129 is then placed, at Step 182, in the queue of the adaptive queuing system 130 in order to be processed. The queuing system 130 may assign the asynchronous event record 129 a unique identifier 60 so that it can be handled by the system for processing. From the adaptive queuing system 130 (the operation of which is described in greater detail later) event records 129 are output, at Step 184, to the event matching processor 128. Here the parameters 136,138 of the received event record 129 are compared, at Step 186, to those of an expected event record 125. The matching, at Step 188, is not carried out as a simple comparison between records which is too simplistic, but rather is a more sophisticated comparison of parameters 136,138 in a disaggregated manner which is more suited to real time processing of event records. This process is described in greater detail later. If the result of the process is to indicate a match, then the event matching engine 128 notifies, at Step 190, the instruction processor 122 of the match and the method 179 returns to the stage of checking for receipt of any new asynchronous event records, at Step 180, as described above. Alternatively, if there is no match found by the sophisticated matching process, the event record 129 is sent, at Step 192, to the recycling engine 132 where it is processed and recycled, at Step 194, back to the adaptive queuing system 130 for queuing and processing again. In this case, the method 179 once again returns to the stage of checking, at Step 180, for receipt of any new asynchronous event records 129 as described above.

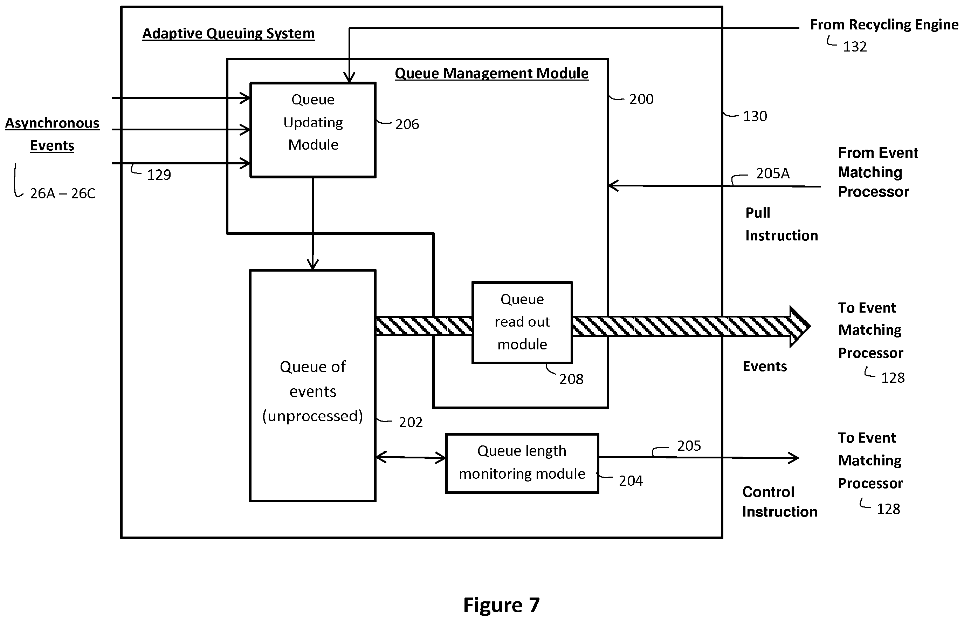

Referring now to Figure 7, the adaptive queuing system 130 is described in greater detail. The queuing system 130 comprises three core modules, namely a queue management module 200, which is configured to receive information relating to asynchronous event records 129, a queue of unprocessed events 202 and a queue length monitoring module 204. The queue management module 200 itself comprises of a queue updating module 206 and a queue readout module 208 (which will be described later). The queue updating module 206 receives asynchronous event records 129 from sources external to the adaptive queuing system 130, namely from the recycling engine 132 of the instruction processing system 120, and also the external systems 26A, 26B, 26C which generate the asynchronous events. The queue updating module 206 is configured to "pre-process" these events before adding them to the end of a queue of unprocessed events 202. The queue is a list of events which are awaiting processing by the event matching processor 128. Such wait may be instantaneous if the event matching processor 128 has sufficient resource to immediately process the event record 129. If this is not the case, then the event records 129 are held in the queue 202 until some processing resource is available. Event records are configured to enter and leave the queue 202 with a "First In, First Out" (FIFO) methodology, i.e. event records 129 are configured to be sent for processing in the order that they were passed to the queue 202 by the queue updating module 206.

The queue 202 is further coupled to the queue length monitoring module 204, which determines how many event records 129 are waiting to be processed. This determination is in real-time and updates as each asynchronous event record 129 is added to and removed from the queue 202. The module 204 then outputs a control signal 205 to the event matching processor 128 on the basis of this information which indicates to the processor 128 the number of asynchronous event records 129 waiting to be processed, so that the event records 129 in the queue 202 are processed in the most efficient way possible. This information is used by the event processor 128 to allocate resources in such a way that asynchronous event records 129 are processed efficiently whilst simultaneously minimising the amount of resource used. This is discussed in further detail with reference to Figure 9. For example, if there are few events in the queue 20 waiting to be processed, the queue length monitoring module 204 will output a control signal 205 to the event processor so as to minimise the allocated resource to the event processing. This advantageously enables that freed up processing resource to be used elsewhere within the instruction processing system 120. Similarly, if the queue 202 becomes large, the queue length monitoring module 204 will output a control signal 205 to the event matching processor 128 instructing more processing resources be made available in order to decrease the size of the queue 202. In this way, the adaptive queuing system 130 is able to efficiently allocate processing resources to process any received asynchronous events, without resource being unnecessarily wasted.

In addition to the queue length monitoring module 204 providing a control signal 205 to the event matching processor 128, the queue management module 200 also receives a pull instruction 205A from the event matching processor 128, which is a request from a free processing resource which is available for event matching for the next asynchronous event record 129 from the queue 202. In response to this information, unprocessed asynchronous event records 129 in the queue 202 (for which there is sufficient resource to process) are "pulled" through to the queue readout module 208 in accordance with a substantially FIFO methodology (mentioned above). The queue readout module 208 may additionally be configured to pull events through which are not at the 'top' of the queue, but to pull the next available asynchronous event record 129 which has been determined to be suitable for efficient matching. For example, the asynchronous event record 129 at the top of the queue 202 may have only very recently been included in a matching attempt (namely is a recycled asynchronous event record 129), and may be provided with a variable parameter 138 which indicates this. Using this information, the queue readout module 208 may determine that the event is likely to be unmatched if it is processed again (as conditions are unlikely to have significantly changed) and so skips this event and pulls through the next available asynchronous event record 129. Similarly, if an asynchronous event record 129 is indicated to be particularly resource intensive, the queue readout module 208 may determine that it is inefficient to attempt to match this asynchronous event 129 and so skips this event. In this way, the adaptive queuing system 130 enables an efficient processing of the asynchronous events 129 in the queue 202.

Event data is then pulled by the queue readout module 208 from the queue 202 and then transmitted to the event matching processor 128, so that the event record can be processed. When an event is read by the queue readout module 208, it is removed from the queue 202. The event record 129 may later return to the queue 202 (via the recycling module 132) if it is unable to be matched at that moment in time.

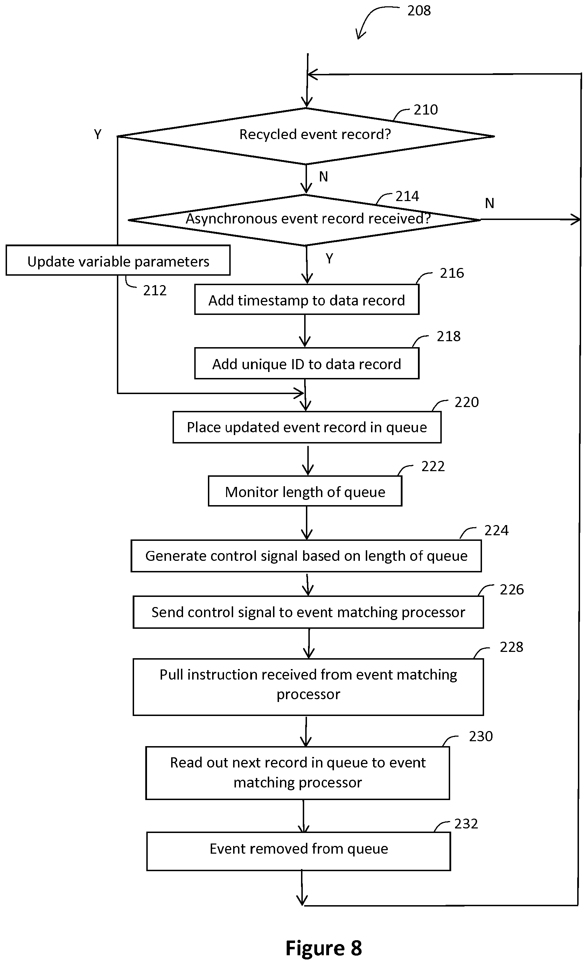

The method of operation 208 of the adaptive queuing system 130 is now described in greater detail with reference to Figure 8. The method 208 commences with the queuing system first determining, at Step 210, the source of the asynchronous event record, namely whether the event has originated from an asynchronous event record generating system 26A, 26B, 26C or from the recycling engine 132 so that any necessary parameters may be assigned to the event record 129 if required. Event records 129 which have originated from an asynchronous event record system have timestamp 148 and unique event 60 ID parameters added to them by the queue updating module 206. Event records 129 originating from the recycling engine 132 skip these steps as they already are in possession of such parameter values. To this end, the queue updating module 206 first determines, at Step 210, whether a recycled event record has been provided. If it has, then the queue updating module 206 updates, at Step 212, any relevant variable parameters. The queue updating module 206 then places, at Step 220, the event record 129 at the end of the queue of unmatched events 202.

If the method 179 determines that an event record 129 has not been provided from the recycling engine 132, the queue updating module 206 determines, at Step 214, if an event record 129 from an asynchronous events system has been provided. If it has, then this is the first time the event record 129 is being processed by the system 120 and the queue updating module 206 updates, at Step 216, the event record 129 with a variable queue timestamp parameter 148 and subsequently updates it, at Step 218, with a unique record identifier parameter 40. The static timestamp parameter is a different parameter which is associated with when the event was actually carried out and is not assigned by the system 120. The event record 129 is then placed, at Step 220, at the end of the queue of unprocessed events 202 as above. If no event was provided at Step 214, then the method proceeds back to Step 210 to determine if an event from the recycling engine 132 has been provided. This process continues until an event record from either source has been provided to the queue updating module 206.

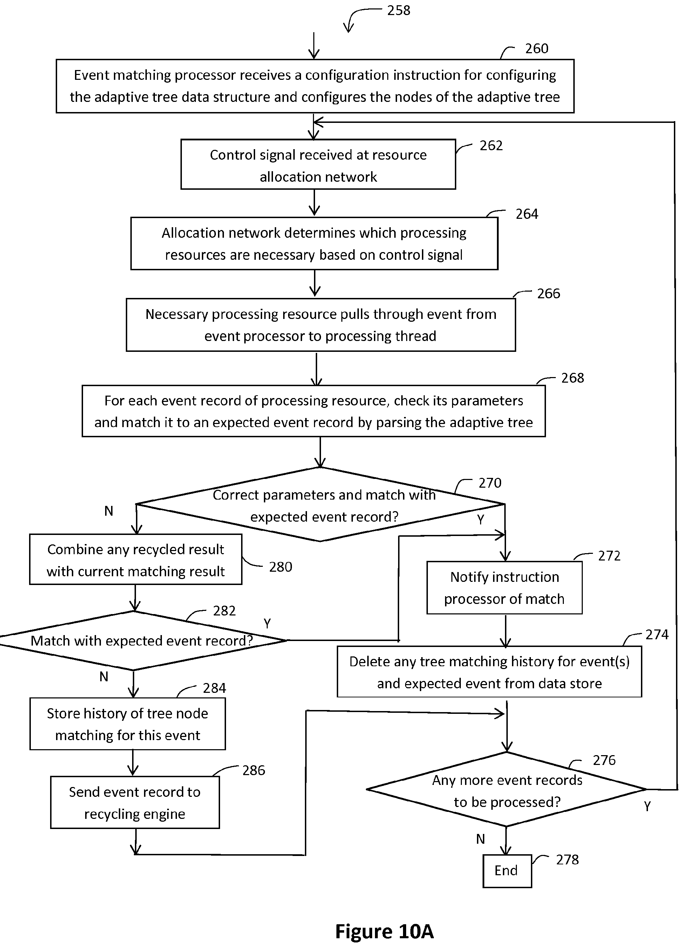

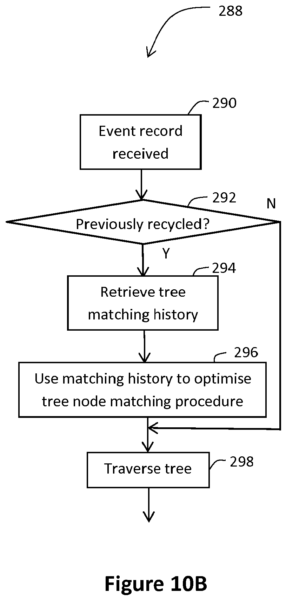

Once an event record 129 has been placed at the end of the queue 202, the length of the queue is then determined, at Step 222, by the queue length monitoring module 222. The length of the queue may simply be determined as the number of events in the queue, or may also take into account the complexity of the event and how much time it is expected to take to process (i.e. events with more parameters may require more processing resource to match and therefore the queue length may be inflated as a result). Following the length of the queue 202 being determined, a control signal 205 is generated, at Step 224, on the basis of this information. This control signal 205 is subsequently outputted, at Step 226, to the event matching processor 128 to indicate the length of the queue 202. The event matching processor 128 then determines the availability of processing resource and is configured to determine in real time (namely within a matter of milli-seconds) the amount of resource which are to be allocated to event matching processing, as described above with reference to Figure 7. A pull instruction 205A is then generated by the processing resource and sent to the adaptive queuing system 130. The pull instruction 205A is received, at Step 228, by the queue management module 200 indicating the resource to which the next available event record in the queue 202 needs to be sent. Using this information, the next event record 129 is then pulled, at Step 230, by the queue readout module 208 from the queue using the FIFO methodology described above, and then subsequently sent to the event matching processor 128 for processing. The event matching processor system and the method of processing are described in greater detail below with reference to Figures 9, 10A and 10B. The event records 129, which have left the queue 202 to be processed, are then removed, at Step 232, from the queue 202. Following this, the adaptive queuing system 130 is configured to wait for more events to be supplied, in accordance with Step 210 of the method 208.

In an alternate embodiment of the instruction processing system of Figure 4, an instruction queuing module similar to the adaptive queueing system described above can be used to queue instructions received from the instruction generation systems 14A, 14B, 14C. In this case the queue length monitoring module would send its control instruction to the instruction processor 122 where processing resources are allocated on the length of the queue of instructions. Appropriately allocated resources would then, on an individual basis, pull unprocessed instructions from the queue of instructions using a queue readout module of the instruction queuing module. However, unlike the adaptive queuing system described above, the instruction queuing module would not require any recycling functionality, as once instructions are pulled from the queue of instructions by the instruction processor, they will be processed. By providing processing resources responsive to the length of the instruction queue, greater efficiencies in the use of processing resources can be achieved.

Returning to the first embodiment described in Figure 4, and referring now to Figure 9, the event matching processor 128 is comprised of a resource allocation network 240, which receives new event records 129 from the adaptive queuing system 130, together with a control signal 205 relating to the current size of the queue (as described above). The control instruction 205 and event record data 129 are then transmitted to the processing resources 242 within the event matching processor 128. The processing resources are comprised of a plurality of assignable processing resource channels 244A, 244B, 244C, 244D which are each configured to be switched in or out depending on the configuration determined by the resource allocation network 240. In the present embodiment, four processors are provided which are each capable of running up to four execution threads providing a total of 16 independent processing channels operating in parallel if required. It is to be appreciated that the number of processing resource channels 244A, 244B, 244C, 244D shown in Figure 9 is for illustrative purposes only and that the actual number of processing resource channels 244A, 244B, 244C, 244D may be greater or fewer than those shown. The processing resource channels are configured to receive event record data in accordance with the determination of the resource allocation network 240, with each channel capable of receiving and processing a single asynchronous event record at time but the channels working independently in parallel such that multiple event records can be processed concurrently. As above, the number of channels shown as being available at each resource is for illustrative purposes only. In this way, each of the threads of the processing resources 242 when enabled by the resource allocation network 240, is able to pull through an asynchronous event record 129 from the queue 202 to be processed. If the control signal 205 indicates that the amount of processing required to process the queue 202 is low, for example due to there being fewer asynchronous events 129 in the queue 202, the resource allocation network 240 is configured to determine that certain threads are not required for efficient processing of the queue. If this is the case, a thread may be switched out of the current asynchronous event record processing task and can be used to take part in other processing need within the system. In this way, only the required amount of processing resource 242 is used, minimising inefficiency.

The processing resources 242 are configured to match the asynchronous event record data with expected events held in the expected event record data store 126 by use of an adaptive tree 246. The adaptive tree 246 is configured by expected event records 125 from the expected event records data store 126 with nodes of the tree 246 representing specific parameters to be matched. The positioning of the nodes within the tree and their respective connections can be based on the probability of the event occurring (see below for more detail). All of the expected event data is represented by the adaptive tree. The adaptive tree 246 receives inputs regarding asynchronous event data from the processing resources 242 and, and uses this information to match nodes of a portion of the adaptive tree. The processing resources 242 determine if there is a match between the two depending on how the asynchronous event record matches nodes of the tree and what point it exits the tree, the nodes of the tree act to carry out decisions in an 'IF THEN ELSE' logical construct. Additional configuration information is received by the adaptive tree 246 to provide the tree with an optimal structure for efficient processing of the event. This may include highlighting which parameters provide the most discriminating power when assessing the likelihood of matching (e.g. the 'quantity' or 'class' static parameters), and assigning them a relative weight within the tree. As has been mentioned above, this may also include receiving information regarding the probabilities 149 of matching each parameter at a given time, where a probability of zero would mean the parameter is included as a node within a tree but is not accessible regarding its connections to the rest of the tree at this moment in time, and correspondingly that no attempt is made at matching this parameter. The nodes of the adaptive tree 246 are dynamically adaptive, and their position within the tree and with respect to each other may be configured to change based on the changes in provided configuration information. The nodes may also be configured to change based on conditional parameters within the event itself. For example, in the case where a prior event is required to have taken place before the present event can begin, the node may be configured initially to be disconnected from the tree and once the conditional event has occurred, it may appear near the 'top' of the tree, as it has a high discriminatory power and can quickly determine whether the present event will be allowed to match.

The ability for the nodes to be adaptable in the way described allows the tree 246 to efficiently match multiple asynchronous events 249 simultaneously. The structure of the tree which allows for the most efficient processing of the asynchronous events 249 will vary depending on the expected events 245 at any given time. If the adaptive tree 246 were to be configured to be static, then the relative structure could not alter in response to new information being provided and either a separate tree would be required for each expected event 245, or the tree would simply need to concatenate trees for each new expected event 245. In this case, an asynchronous event 249 would need to traverse multiple trees to determine if it matched any expected event, which would introduce a great degree of inefficiency.

The adaptive tree 246 uses its configured structure to compare the static and variable parameters of the expected and synchronous event records at each node to verify whether there is a match between the two. A decision is made at each node of the tree whether there is a match between one or more parameters and from this result, it is decided which branch of the tree the asynchronous event should be moved to, using an 'if then else' methodology as mentioned above. For example, if a parameter of an expected event record 125 is determined to be matched to a parameter of an asynchronous event record 129 at a node, the asynchronous event may then be moved to the next node for another parameter to be matched, else the event may be configured to abandon any further matching and leave the tree. Alternatively, the event may be configured to leave down a different branch to attempt a match of an alternate parameter. Subsequent nodes may then compare additional parameters to assess the overall quality of the match. The adaptive tree 246 may also adopt a 'fuzzy logic' approach when attempting to match parameters at each node. In this instance, the adaptive tree 246 may be configured to provide an overall tolerance for imprecise matching and to take this imprecision into account when parsing the adaptive tree 246. For instance, if a quantity parameter 454 is not matched between the expected event 125 and the asynchronous event 129, but the values are within 5% of each other, the event may proceed down a branch of the tree which allows for this type of mismatch. Future nodes and branches of the tree 246 which follow this particular node matching may then be configured to know that there has been a mismatch and to utilise this information accordingly when making further matching decisions.

Each node additionally generates metadata regarding the result of the matching procedure at that node in association with that asynchronous event. When the matching procedure in the adaptive tree 246 has been completed (whether successful or not), this metadata is sent to a matching history module 248 and subsequently stored in a matching history data store 250. This store keeps a record of the result of the progression of the asynchronous event record 129 through the adaptive tree 246 and may be accessed by the adaptive tree 246. This ability for the tree 246 to access this metadata aids in the efficient matching of asynchronous events to expected events in the case where an event is not matched in its first pass through the matching process. When an unmatched event is recycled and subsequently returns to the tree 246 in another matching attempt, the adaptive tree 246 accesses the metadata related to this event and configures the adaptive tree to most optimally process the event when combining the information received from this metadata with the configuration information received by the tree as described above. For instance, in the case when a previous iteration of the matching method has determined that a conditional event has been determined to have already occurred, the adaptive tree may be configured to place this node late in the adaptive logic tree 246, as it has a high to certain probability of a successful matching and so has a relatively low discriminatory power. In a further example of this methodology, when metadata is accessed in a recycled event, the adaptive tree may be configured to begin the matching procedure at the point where it had previously failed. In an alternate example, the position of the nodes in the tree and with respect to each other may be configured to alter on the basis of this information, as described above. This reduces the processing time of the initially unmatched event on subsequent attempts. In a yet further example, the adaptive tree may be configured to not attempt to match static parameter 136 nodes of an expected event 129 which have been matched in a previous matching attempt, but to actively attempt to match variable parameter 138 nodes of an expected event 129 which have been matched in a previous matching attempt. This is because whilst the static parameters 136 cannot change since the last time the event record was attempted to be matched to the expected events, the variable parameters 138 may have done, and as such, a previously established variable parameter match may now be invalid. This may be achieved by "short-cutting" an asynchronous event record 129 through parts of the tree which relate to previously matched static parameters 136. In other words, for a recycled event record 129 to be reconsidered, the processing resources 242 do not seek to match previously matched static parameters 136 as the results of that matching are already available in the matching history data store 250. Accordingly, the matching process is made more efficient for recycled asynchronous event records.

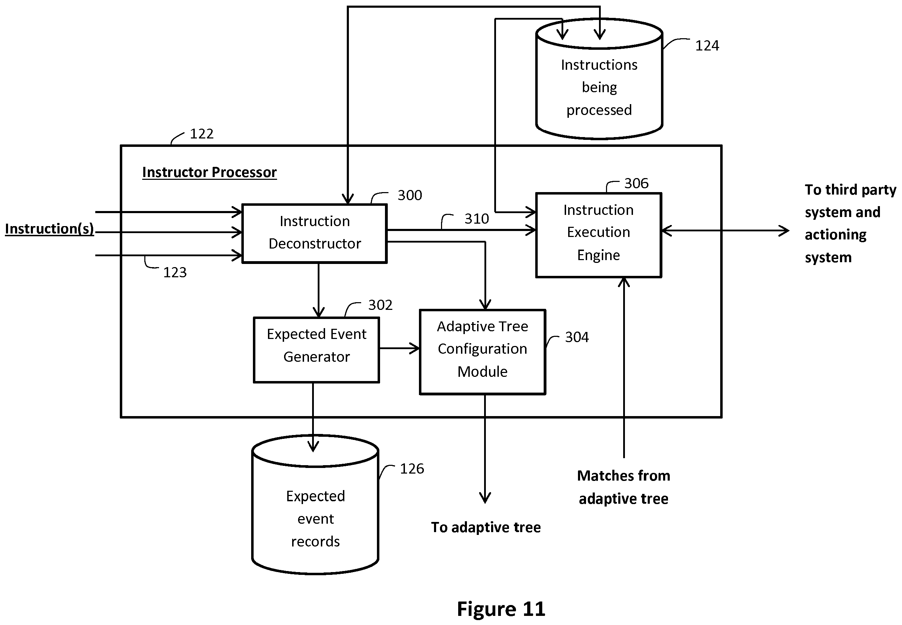

When a matching attempt is completed, the result of that attempt and the asynchronous event data record are passed to a results processor 252. The results processor 252 is coupled to the matching history module 248, the recycling engine 132 and the instruction processor 122. In the case that the matching procedure has been successful, the event record is sent to the instruction processor 122 so that the instruction may be processed, the details of which are described below in reference to Figure 11. Simultaneously, an instruction will be sent to the matching history module 248 instructing that any matching history record associated with the matched event be deleted. In the case that the matching procedure is unsuccessful, the event data record is passed to the recycling engine 132 and then subsequently placed back in the unprocessed event queue 202 as described previously.

The method of operation 258 of the event matching processor 128 is now described in greater detail with reference to Figure 10A. The event matching processor 128 first receives, at Step 260, a configuration instruction from the instruction processor, for the purpose of configuring the adaptive tree data structure. This configuration instruction is enacted and the nodes of the adaptive tree 246 are configured to provide an optimal structure for the efficient processing and matching of expected event records 125 with asynchronous event records 129, in accordance with the description above. This configuration may be subsequently updated as additional instructions are received by the instruction processor 122 wherein the additional instruction causes the optimal structure of the adaptive tree 246 to change.

Following the configuration of the adaptive tree 246, the control signal 205 is received, at Step 262, by the resource allocation network 240 from the adaptive queuing system 130, where the control signal 205 is provided for the purpose of determining an appropriate amount of processing resource 242 which is to be used to process asynchronous events waiting in the unmatched events queue 202. Upon receipt of the control signal 205, the resource allocation network 240 determines, at Step 264, which threads of the processing resource channels 244A, 244B. 244C, 244D are necessary in order to perform an efficient processing of asynchronous events 129 in the queue 202. On the basis of this information, each thread may then "switch-in" or "switch-out." If the allocation network has determined it is necessary to switch in a thread, it is switched-in and it then sends a pull instruction to the adaptive queuing system 130 requesting that an asynchronous event record 129 be pulled, at Step 266, through to the thread, to be processed. Each event record within the processing resources is then processed by attempting to match them with expected event data records via use of the adaptive tree data structure described above. This is achieved by checking, at step 268, the static and/or variable parameters within the asynchronous event record and matching these sequentially to the parameters 136, 138 of an expected event data record 125 by parsing the adaptive tree.

When this initial matching attempt has been completed, the system is configured to determine, at Step 270, whether an asynchronous event has been successfully matched to an expected event record. If there is an instantly available match, a signal will be sent to the results processor 252 indicating this result, and a subsequent signal is sent, at Step 272, to the instruction processor 122 confirming the match 272. At this point, the instruction processor 122 is configured send a control signal to the expected event record data store 126, deleting, at Step 274, the associated expected event data record 125. The action of the instruction processor for enacting the instruction following this notification is discussed in detail below with reference to Figure 11. In concurrence with a signal being sent to the instruction processor, the results processor 252 also sends, at Step 274, a control signal to the matching history module 248 notifying it of the match and instructing it to delete any applicable matching history for that event record 129.

Following the above steps, the method 258 continues with the event processor 128 checking, at Step 276, for any further events which are stored in the resource allocation network 240 waiting to be processed. If there are, then the system will process these in the manner described above, starting at Step 260. If there are no more events to be processed, the method ends, at Step 278, pending further configuration instructions and/or more events being received at the resource allocation network 240 subsequently.

Returning to Step 270, if the initial matching attempt is unsuccessful and the parameters are incorrect for the purposes of matching, the adaptive tree 246 then communicates with the matching history module 248 in order to retrieve any matching history metadata associated with that event. As described above, the ability for the tree 246 to ascertain previous history of an event may aid in its successful and efficient matching by providing a configuration which takes into account the previous matching history of the asynchronous event record 129, and changing the nodes' positions within the tree 246, and their position with respect to other nodes, in such a manner that allows for the present matching iteration to proceed in an efficient manner. This aspect of the embodiment will be discussed in greater detail below, with reference to Figure 10B. However, it may also enable a match to be determined even when an initial attempt to match parameters has failed. This may occur, for example, when a variable parameter such as a time window constraint has changed between successive iterations of matching attempts which causes a mismatch to be flagged, even when originally a match was established for this parameter. A further example where this can be of use is where two or more asynchronous events may correspond to a single expected event, and only when these two or more events are considered in combination will it be possible to achieve a match (e.g. where the static quantity parameter in an expected event may be achieved by the sum of two asynchronous event static quantity parameters, but could not be matched by one of the events in isolation). In this case, the adaptive tree 246 may note that a number of parameters relating to the present asynchronous event match the history of an event, even if a different event identifier parameter is assigned (i.e. they are separate events, but may have the same source, location, class etc). Noting the similarity, the adaptive tree 246 can retrieve the similar event(s) and see if a suitable unmatched parameter can be matched in combination through a processing means.

In an alternative embodiment (not shown), if an asynchronous event 129 is unable to be matched with an expected event 125 but has matched a large portion of the adaptive tree 246 successfully, a signal may be sent to the results processor 252 which indicates this. The processor may then be configured to further notify the instruction processor 122, which subsequently may create a new expected event record 125 associated with the corresponding instruction record 123 to reflect this matching result. The present expected event record 125 may then be deleted. The new expected event record would then be used for any matching corresponding to the initial instruction record 123. This may be used in a situation where, despite a parameter not be matched, it is clear from the matching against the adaptive tree 246 that the asynchronous event 129 is related to an expected event record 125 and is in fact a partial execution of the expected event 125. The expected event 125 could then be modified to reflect that the partial execution is expected to be completed by a future asynchronous event 129. Returning to the environmental control example, if it is expected that a water reservoir is to be filled with ten million litres of water, but due to a supply problem, only eight million litres is provided, the event matching may be extremely good but not completed due to the two million litre discrepancy. In this instance, the expected event may be modified so that it now expects only a further two million litres of water to be provided in a subsequent asynchronous event.

In this series of steps, the method attempts to determine whether the current matching attempt can be combined with any previous recycled result in order to generate a full match of all parameters between the asynchronous event 129 and the expected event 125, namely whether such a combination leads to a successful tree matching of an asynchronous event record 129. In this manner, multiple asynchronous events 129 may be combined and matched to a single expected event 125. Firstly, the retrieved history (if any) of any suitable event is combined, at Step 280, with the present matching results to establish, at Step 282, if the combination can lead to a match between the asynchronous event and the expected event record, using the continued parsing of the adaptive tree as described previously. Suitable event histories may include any event which has similar parameter data to the present event, for example, the same source or same instruction record identified. If a match is then able to be established, the event matching processor 128 proceeds by notifying the instruction processor of the match, as described in Step 272. If a match cannot be established, the adaptive tree 246 notifies, at Step 284, the matching history module 248 of how far the event progressed before the matching attempt was halted. The matching history module 248 then stores this information in the history data store 250. Concurrently, the event record is sent to the results processor 252, and is then subsequently sent, at Step 286, to the recycling engine 132. The method 258 proceeds by checking if there are any further events to be processed, in accordance with Step 276.

Figure 10B shows an expanded view of a method 288 of handling previously recycled instructions making use of any history of previous matching which may be available. This aspect occurs before a matching is attempted using the adaptive tree 246. This operation begins when an asynchronous event record is received, at Step 290, by a processing resource 242. The processing resource 242 then determines, at Step 292, whether the asynchronous event record 129 has been previously recycled. This is achieved by retrieving information from the matching history module 248 relating to the asynchronous event record 129. This is carried out by identifying if there is any information relating to the event identifier of that event record 129 in the matching history data store 250. If there is such information, the matching history is retrieved, at Step 294, by the processing resource 242 and is used to optimise, at Step 296, the tree node matching procedure as described above. This may be achieved, for instance, by indicating that the asynchronous event 249 is configured to start at a particular node which occurs at a point in the tree 246 that would usually only be accessible after a number of logical decisions have already been made (i.e. that some parameters have already been compared and matched/not matched). This may also be achieved by reconfiguring the position of nodes in the tree 246, with respect to their overall position in the tree and with respect to other nodes, with the structure of the tree being altered to reflect the matching results at each node for a previous tree node matching procedure by the asynchronous event 249. Following this optimisation, the event is then configured to match, at Step 298, nodes of the adaptive tree 246 in order to determine if there is a match between the asynchronous event 129 and an expected event 125, in accordance with Figure 10A. Returning to step 292, if it is determined that the asynchronous event has not been previously recycled, i.e. this is its first attempt to be matched, then the event proceeds straight to Step 298 and begins to match nodes of the tree 246 in an attempt to be matched against an expected event record 125, in accordance with Step 262.

The composition of the instruction processor 122 is now shown in greater detail in Figure 11. The instruction processor comprises an instruction deconstructor 300 which is configured to receive instructions 123 from an external instruction generation system. The deconstructor 300 converts the instruction 123 into a suitable storable format so that the instructions may be stored in the 'being processed' list which is stored in the data store 124. The instruction deconstructor 300 may also, when appropriate, break down the received instruction record 123 into a plurality of discrete actions (also known as sub-actions) as described previously. These discrete actions may or may not require a matched asynchronous event to occur before they can be actioned. This is described in more detail below. The stored instructions 123 may also be retrieved and read by the instruction deconstructor 300 at a later point.

The instruction processor 122 further comprises an expected event generator 302 and an adaptive tree configuration module 304, both of which are coupled to the instruction deconstructor 300 as well as each other. The expected event generator 302 receives instructions which have been deconstructed as described above and further relates these to events which may be expected to occur before the instruction can be actioned (e.g. information can only be provided to system A once a password is entered into systems B and C). These generated related events are then converted into a suitable storable format and placed into the expected event records data store 126 as expected event records 125. The expected event records 125 are also received by the adaptive tree configuration module 304, which itself is coupled to the instruction deconstructor 300 (as described above). The configuration module uses the received information from both sources to determine the most efficient way of structuring the adaptive tree 246 such that events are processed using the tree 246 as quickly as possible. When this has been determined, the module sends a command signal to the adaptive tree module 130 so that the tree 246 may be configured in accordance with this determined structure. Here each parameter may represent a node of the adaptive tree as has been explained previously.

The instructor processor 122 finally comprises an instruction execution engine 306 which is coupled to the instructions being processed data store 124 and is configured to receive signals from the results processor 252 of the adaptive tree module 130 and also the third party system 32 and the actioning system 28. When an expected event record 125 is determined to be matched to one or more asynchronous event records 129 according to the results processor 252, this expected event record 125 is sent to the execution engine 306. The information regarding which instruction this relates to is retrieved from the 'instructions being processed' data store 124 and the executable instruction which is to be actioned is then sent to the third party and actioning systems 32, 28 for verification and actioning respectively. In one embodiment, if the third party system 32 indicates that the instruction may be actioned, a signal is sent back to the execution engine 306 notifying it of this event. A further signal is then sent to the being processed data store 124 instructing it to delete this instruction from the store. If the third party system 32 does not provide the requisite verification, the instruction is not actioned and the instruction remains in the data store 124. However, in other embodiments the use of the third party system 32 may not be required.

The instruction execution engine 306 is also coupled directly to the instruction deconstructor 300. This allows some parts (sub-actions) of instructions to be directly actioned without the need for a corresponding asynchronous event to have occurred. However the instruction deconstructor 300 never provides the entire instruction for direct processing as at least one of the sub-actions must be conditional for the instruction to be conditional. Returning to the previous environmental control system example, such actions would relate to the discussed pre-execution actions (sub-actions) 310 such as the checking of water levels available for the sprinkler system and the topping of reservoirs where necessary. In this instance, the instruction deconstructor 300 breaks down a received instruction record 123 into a plurality of discrete actions (sub-actions 310) and identifies which of these instructions may be actioned immediately (pre-execution actions) and which must wait for a matched asynchronous event 129. Those which must have a matched asynchronous event 129 are used to generate corresponding expected event records. Those which are identified as pre-execution actions 310 are then transmitted to the instruction execution engine 306, which subsequently proceeds to send an executable instruction to be actioned as described above. In this way, all suitable pre-execution actions 310 required for an initial instruction record 123 to be carried out, may be executed before a matching asynchronous event 129 is found, which advantageously minimises the time it takes to implement a complete multi-part instruction.

An example of how the instruction processor 122 may function is described below. An instruction may be sent that requires computer A to be supplied with a decryption key to decrypt a particular document (Instruction 1) so that it may be read, but in order for this to occur, firstly a password must be entered into a separate system B (Event 1) which is housed in a different location. This event would be generated by the expected event generator (with suitable static and variable parameters) and placed in the expected event records data store 126. Additionally, in order for computer A to decrypt the document, it must first be sent an encrypted version of the document (Instruction 1A). In this example, the instruction to be carried out has been separated into the main instruction (1), which must only be enacted once Event 1 has been enacted, and a sub-instruction (1A) which is not reliant on the occurrence of an event. In this scenario, the two instructions would be sent to the being processed data store 124. As 1A is not associated with an event, the execution processor would immediately send this instruction for actioning. As Instruction 1 is associated with Event 1, the execution processor would only send this to be actioned once the expected event has been matched with an asynchronous event. Upon receipt of a signal that this match has indeed occurred, the instruction may then be enacted. It is apparent that in this instance, the process of providing system A with a readable document has been sped up by the separation of the initial instruction into two actionable instructions, one of which is instantly actionable. In the case where the instructions 1 and 1A are both only actioned when Event 1 has occurred, there would be a delay in the receipt and execution of the document whilst the suitable software application is being downloaded, which would not occur in the instance where the application is able to be instantly provided to computer A.

Furthermore, it will be understood that features, advantages and functionality of the different embodiments described herein may be combined where context allows.

Having described several exemplary embodiments of the present invention and the implementation of different functions of the device in detail, it is to be appreciated that the skilled addressee will readily be able to adapt the basic configuration of the system to carry out described functionality without requiring detailed explanation of how this would be achieved. Therefore, in the present specification several functions of the system have been described in different places without an explanation of the required detailed implementation as this not necessary given the abilities of the skilled addressee to code functionality into the system.

## Claims

1. An asynchronous event-based instruction processing system (120) for processing conditional instruction records (123) continuously in real-time, each conditional instruction record having one or more associated asynchronous event records (129), which need to be received by the system for an instruction of the conditional instruction record (123) to be executed, the system comprising:
an adaptive queuing system (130) for receiving a plurality of asynchronous event records (129) and temporarily storing the same in a queue (202), each asynchronous event record (129) pertaining to an event occurring asynchronously to the generation of the associated conditional instruction record (123) to which the asynchronous event record relates, the adaptive queuing system (130) comprising a queue length monitoring module (204) for monitoring the length of the queue of asynchronous event records and providing queue length information (205) to an event matching processor (128), and a queue management module (200);
an instruction processor (122) for receiving a conditional instruction record (123) having a plurality of parameters, the instruction processor being arranged to generate an expected event record (125) using at least some of the parameters (136,138) of the received conditional instruction record (123), wherein the expected event record (125) comprises static parameters (136) which remain static throughout the processing of the conditional instruction record (123) and variable parameters (138) which can vary during the processing of the conditional instruction record (123);
the event matching processor (128) for processing each of the received asynchronous event records (129) to determine if they correspond to any of the received conditional instruction records (123); the event matching processor (128) comprising:
a plurality of processing resources (242) which operate in parallel and a resource allocation network (240), the resource allocation network being arranged to access a proportional amount of the available processing resources (242) dependent on the size of the queue (202) as determined by the queue length information (205);
an adaptive logic tree data structure (246) arranged to be used concurrently by the processing resources (242) for matching the plurality of received asynchronous event records (129) with the parameters of each of the expected event records (125), the adaptive logic tree data structure (246) comprising a plurality of nodes, including at least one static node representing a static parameter (136) of an expected event record (125) and at least one variable node representing a variable parameter (138) of an expected event record (125); a results processor (252) for determining the results of an asynchronous event record (129) parsing of the adaptive logic tree (246); and
a matching history module (248) for referencing and logging the processing of an asynchronous event record through the adaptive logic tree (246) and storing the results to a matching history data store (250);
wherein the event matching processor (128) is arranged to indicate to the instruction processor (122) if the events specified by any expected event records (125) have occurred as determined by the presence of one or more correctly matched asynchronous event records (129); and
a recycling engine (132) for recycling any asynchronous event records (129) which have been determined using the adaptive tree structure (246) not to match an expected event record (125) at a current moment in time, the recycling engine placing the asynchronous event record (129) back in the queue management module (200) of the adaptive queuing system (130);
wherein the results processor (252) is configured to transmit a matched result to the instruction processor (122) or an unmatched asynchronous event record (129) to the recycling engine (132);
the queue management module (200) of the adaptive queuing system (130) being configured to manage updating of the queue (202) of asynchronous event records and to read out a plurality of the asynchronous event records (129) to the event matching processor (128) on demand and which comprises:
a queue updating module (206) which receives the asynchronous event records (129) from systems (26A, 26B, 26C) external to the asynchronous event-based instruction processing system (120) and which receives recycled asynchronous event records from the recycling engine (132) to place in the queue (202) and populates the queue (202) in a First in First Out (FIFO) manner, and which is configured to determine whether a received asynchronous event record originated from the recycling engine (132); and
a queue read out module (208) for reading out a plurality of asynchronous event records concurrently to the resource allocation network (240) of the event matching processor (128);
wherein when the event matching processor (128) processes a previously recycled asynchronous event record (129), the adaptive logic tree data structure (246) is configured in accordance with stored results in the matching history data store (250); and
wherein the system is arranged to continually create expected event records (125) as conditional instruction records (123) are received and to match these continuously with asynchronous event records (129) present in the system which have not been matched to the expected event records.

2. An instruction processing system according to Claim 1, wherein the results processor (252) is arranged for every asynchronous event record (129) which fails to be matched to an expected event record (125), to access the matching history module (248) and determine using the stored histories of previously failed asynchronous event records (129), whether a combination of a current asynchronous event record (129) and any of the previously failed asynchronous event records (129) would lead to a match with an expected event record (125).

3. An instruction processing system according to Claim 2, wherein the results processor (252) is arranged to indicate to the instruction processor (122), a combination of asynchronous event records (129) which match the expected event record (125), and the instruction processor (122) is arranged to mark the corresponding conditional instruction record (123) as fulfilled such that it can subsequently be executed.

4. An instruction processing system according to any preceding claim, wherein instruction processor (122) comprises an expected event generator (302) arranged to create event records (125) including conditional parameters which only to be considered once other events matching other specified parameters have occurred, and the instruction processor (122) comprises an adaptive tree configuration module (304) which is arranged to configure adaptive tree (246) with the conditional parameters only once the specified conditional events pertaining to those parameters have occurred.

5. An instruction processing system according to any preceding claim, wherein instruction processor (122) comprises an instruction deconstructor (300) which is arranged to deconstruct a conditional instruction record (123) into a plurality of different sub-actions which are to be carried out to execute that instruction and, for at least one of these selected sub-actions, to determine parameters relating to expected events to be used for generating a corresponding expected event record (125).

6. An instruction processing system according to Claim 5, wherein the instruction processor further comprises an instruction execution engine (306) and the instruction deconstructor (300) is arranged to forward a subset of the different sub-actions of the instruction record (123) to the instruction execution engine (306) to be executed unconditionally prior to matching of the expected event record (125).

7. An instruction processing system according to any preceding claim, wherein the instruction processor (122) comprises an expected event generator (302) arranged to create expected event records (125) including conditional parameters which only to be considered once other events matching other specified parameters have occurred, and the instruction processor (122) comprises an adaptive tree configuration module (304) which is arranged to configure the adaptive tree (246) with the conditional parameters only once the specified conditional events pertaining to those parameters have occurred.

8. An instruction processing system according to Claim 7, further comprising an expected event record data store (126) for storing expected event records (125) created by the expected event generator (302).

9. An instruction processing system according to any preceding claim, wherein the adaptive tree (246) is arranged to be configured in accordance with a current conditional state of the conditional event records (125) being matched, and to change to a different configuration if some predetermined parameters of the conditional event records (125) have been matched to asynchronous event records (129) which change the conditional state of the conditional event records (125).

10. An instruction processing system according to any preceding claim, wherein the plurality of processing resources (242) are comprised of a plurality of assignable processing resource channels (244A, 244B, 244C, 244D) which are each configured to be switched in or out depending on the configuration determined by the resource allocation network (240).

11. A method of processing conditional instruction records (123) continuously in real-time, each conditional instruction record having one or more associated asynchronous event records (129), which need to be received for an instruction of the conditional instruction record (123) to be executed, the method comprising:
receiving a plurality of asynchronous event records (129) from systems (26A, 26B, 26C) via an external communications network (16) and a recycling engine (132) and temporarily storing the same in an adaptive queuing system (130) which comprises a queue (202) and a queue management module (200), where a queue updating module (206) of the queue management module (200) receives the asynchronous event records and populates the queue (202) in a First In First Out (FIFO) manner, each asynchronous event record (129) pertaining to an event occurring asynchronously to the generation of the associated conditional instruction record (123) to which the asynchronous event record relates;
monitoring the length of the queue of asynchronous event records and providing queue length information (205) for subsequent processing;
receiving a conditional instruction record (123) having a plurality of parameters;
generating an expected event record (125) using at least some of the parameters (136,138) of the received conditional instruction record (123), wherein the expected event record (125) comprises static parameters (136) which remain static throughout the processing of the conditional instruction record (123) and variable parameters (138) which can vary during the processing of the conditional instruction record (123);
processing each of the received asynchronous event records (129) to determine if they correspond to any of the received conditional instruction records (123); the processing step comprising:
arranging a resource allocation network (240) to access a proportional amount of the available processing resources (242) of a plurality of processing resources (242) which operate in parallel, using the size of the queue (202) as determined by the queue length information (205), where the asynchronous event records (129) are read out to the resource allocation network (240) by a queue read out module (208) of the queue management module (200); and
using an adaptive logic tree data structure (246), arranged to be used concurrently by the processing resources (242), for matching the plurality of received asynchronous event records (129) with the parameters of each of the expected event records (125), the adaptive logic tree data structure (246) comprising a plurality of nodes, including at least one static node representing a static parameter (136) of an expected event record (125) and at least one variable node representing a variable parameter (138) of an expected event record (125);
determining the results of an asynchronous event record (129) parsing of the adaptive logic tree (246);
referencing and logging the processing of an asynchronous event record through the adaptive logic tree (246) and storing the results to a matching history data store (250);
indicating to the instruction processor (122) if the events specified by any expected event records (125) have occurred as determined by the presence of one or more correctly matched asynchronous event records (129); and
recycling any asynchronous event records (129) which have been determined using the adaptive tree structure (246) not to match an expected event record (125) at a current moment in time using the recycling engine (132), the recycling step placing the asynchronous event record (129) back in the adaptive queuing system (130);
determining, upon receipt of an asynchronous event record (129) for processing, whether the asynchronous event record (129) pertains to a recycled asynchronous event record (129) and where it is determined that it does, retrieving results from the matching history data store relating to the recycled asynchronous event record (129) and configuring the adaptive logic tree data structure (246) in accordance with the retrieved results;
wherein the method continually creates expected event records (125) as conditional instruction records (123) are received and matches these continuously with asynchronous event records (129) present in the system which have not been matched to the expected event records.

## Patentansprüche

1. Befehlsverarbeitungssystem (120), das auf asynchronen Ereignissen basiert, zum kontinuierlichen Verarbeiten von Datensätzen (123) von bedingten Befehlen in Echtzeit, wobei jeder Datensatz von bedingten Befehlen einen oder mehrere verknüpfte Datensätze (129) von asynchronen Ereignissen aufweist, die durch das System empfangen werden müssen, damit ein Befehl des Datensatzes (123) von bedingten Befehlen ausgeführt wird, wobei das System Folgendes umfasst:
ein adaptives Warteschlangensystem (130) zum Empfangen mehrerer Datensätze (129) von asynchronen Ereignissen und temporären Speichern derselben in einer Warteschlange (202), wobei jeder Datensatz (129) von asynchronen Ereignissen zu einem Ereignis gehört, das asynchron zu der Erzeugung des verknüpften Datensatzes (123) von bedingten Befehlen auftritt, auf den sich der Datensatz von asynchronen Ereignissen bezieht, wobei das adaptive Warteschlangensystem (130) ein Warteschlangenlängenüberwachungsmodul (204) zum Überwachen der Länge der Warteschlange von Datensätzen von asynchronen Ereignissen und Bereitstellen von Warteschlangenlängeninformationen (205) an einen Ereigniszuordnungsprozessor (128) und ein Warteschlangenverwaltungsmodul (200) umfasst;
einen Befehlsprozessor (122) zum Empfangen eines Datensatzes (123) von bedingten Befehlen, der mehrere Parameter aufweist, wobei der Befehlsprozessor eingerichtet ist, um einen Datensatz (125) von erwarteten Ereignissen unter Verwendung wenigstens einiger der Parameter (136, 138) des empfangenen Datensatzes (123) von bedingten Befehlen zu erzeugen, wobei der Datensatz (125) von erwarteten Ereignissen statische Parameter (136), die im Laufe der Verarbeitung des Datensatzes (123) von bedingten Befehlen statisch bleiben, und variable Parameter (138) umfasst, die während der Verarbeitung des Datensatzes (123) von bedingten Befehlen variieren können;
den Ereigniszuordnungsprozessor (128) zum Verarbeiten jedes der empfangenen Datensätze (129) von asynchronen Ereignissen, um zu bestimmen, ob sie beliebigen der empfangenen Datensätze (123) von bedingten Befehlen entsprechen; wobei der Ereigniszuordnungsprozessor (128) Folgendes umfasst:
mehrere Verarbeitungsressourcen (242), die parallel in Betrieb sind, und ein Ressourcenzuweisungsnetzwerk (240), wobei das Ressourcenzuweisungsnetzwerk eingerichtet ist, um abhängig von der Größe der Warteschlange (202) wie durch die Warteschlangenlängeninformationen (205) bestimmt auf eine proportionale Menge der verfügbaren Verarbeitungsressourcen (242) zuzugreifen;
eine Datenstruktur (246) eines adaptiven Logikbaums, die eingerichtet ist, um durch die Verarbeitungsressourcen (242) zum Zuordnen der mehreren empfangenen Datensätze (129) von asynchronen Ereignissen zu den Parametern jedes der Datensätze (125) von erwarteten Ereignissen gleichzeitig verwendet zu werden, wobei die Datenstruktur (246) des adaptiven Logikbaums mehrere Knoten umfasst, einschließlich wenigstens eines statischen Knotens, der einen statischen Parameter (136) eines Datensatzes (125) von erwarteten Ereignissen darstellt, und wenigstens eines variablen Knotens, der einen variablen Parameter (138) eines Datensatzes (125) von erwarteten Ereignissen darstellt; einen Ergebnisprozessor (252) zum Bestimmen der Ergebnisse eines Parsings des Datensatzes (129) von asynchronen Ereignissen des adaptiven Logikbaums (246); und
ein Zuordnungsverlaufsmodul (248) zum Referenzieren und Protokollieren der Verarbeitung eines Datensatzes von asynchronen Ereignissen durch den adaptiven Logikbaum (246) und Speichern der Ergebnisse in einem Zuordnungsverlaufsdatenspeicher (250);
wobei der Ereigniszuordnungsprozessor (128) eingerichtet ist, um dem Befehlsprozessor (122) anzuzeigen, ob die Ereignisse aufgetreten sind, die durch beliebige Datensätze (125) von erwarteten Ereignissen spezifiziert sind, wie durch das Vorhandensein eines oder mehrerer korrekt zugeordneter Datensätze (129) von asynchronen Ereignissen bestimmt; und
eine Wiederverwendungs-Engine (132) zum Wiederverwenden von beliebigen Datensätzen (129) von asynchronen Ereignissen, von denen unter Verwendung der Struktur (246) eines adaptiven Baums bestimmt wurde, dass sie zu einem aktuellen Zeitpunkt nicht einem Datensatz (125) von erwarteten Ereignissen zugeordnet sind, wobei die Wiederverwendungs-Engine den Datensatz (129) von asynchronen Ereignissen zurück in das Warteschlangenverwaltungsmodul (200) des adaptiven Warteschlangensystems (130) platziert;
wobei der Ergebnisprozessor (252) konfiguriert ist, um ein zugeordnetes Ergebnis an den Befehlsprozessor (122) oder einen nicht zugeordneten Datensatz (129) von asynchronen Ereignissen an die Wiederverwendungs-Engine (132) zu übertragen;
wobei das Warteschlangenverwaltungsmodul (200) des adaptiven Warteschlangensystems (130) konfiguriert ist, um ein Aktualisieren der Warteschlange (202) von Datensätzen von asynchronen Ereignissen zu verwalten und um mehrere der Datensätze (129) von asynchronen Ereignissen auf Anfrage an den Ereigniszuordnungsprozessor auszulesen (128), und das Folgendes umfasst:
ein Warteschlangenaktualisierungsmodul (206), das die Datensätze (129) von asynchronen Ereignissen von Systemen (26A, 26B, 26C) extern des Befehlsverarbeitungssystems (120) empfängt, das auf asynchronen Ereignissen basiert, und das wiederverwendete Datensätze von asynchronen Ereignissen von der Wiederverwendungs-Engine (132) empfängt, um sie in der Warteschlange (202) zu platzieren, und die Warteschlange (202) auf eine First-ln-First-Out(FIFO)-Weise bestückt und das konfiguriert ist, um zu bestimmen, ob ein empfangener Datensatz von asynchronen Ereignissen von der Wiederverwendungs-Engine (132) stammt; und
ein Warteschlangenauslesemodul (208) zum gleichzeitigen Auslesen mehrerer Datensätze von asynchronen Ereignissen an das Ressourcenzuweisungsnetzwerk (240) des Ereigniszuordnungprozessors (128);
wobei, wenn der Ereigniszuordnungsprozessor (128) einen zuvor wiederverwendeten Datensatz (129) von asynchronen Ereignissen verarbeitet, die Datenstruktur (246) des adaptiven Logikbaums gemäß gespeicherten Ergebnissen in dem Zuordnungsverlaufsdatenspeicher (250) konfiguriert wird; und
wobei das System eingerichtet ist, um fortlaufend Datensätze (125) von erwarteten Ereignissen zu erstellen, während Datensätze (123) von bedingten Befehlen empfangen werden, und um diese kontinuierlich Datensätzen (129) von asynchronen Ereignissen zuzuordnen, die in dem System vorhanden sind, die nicht den Datensätzen von erwarteten Ereignissen zugeordnet wurden.

2. Befehlsverarbeitungssystem nach Anspruch 1, wobei der Ergebnisprozessor (252) für jeden Datensatz (129) von asynchronen Ereignissen, der fehlschlägt, einem Datensatz (125) von erwarteten Ereignissen zugeordnet zu werden, eingerichtet ist, um auf das Zuordnungsverlaufsmodul (248) zuzugreifen und unter Verwendung der gespeicherten Verläufe von zuvor fehlgeschlagenen Datensätzen (129) von asynchronen Ereignissen zu bestimmen, ob eine Kombination eines aktuellen Datensatzes (129) von asynchronen Ereignissen und beliebiger der zuvor fehlgeschlagenen Datensätze (129) von asynchronen Ereignissen zu einer Zuordnung zu einem Datensatz (125) von erwarteten Ereignissen führen würde.

3. Befehlsverarbeitungssystem nach Anspruch 2, wobei der Ergebnisprozessor (252) eingerichtet ist, um dem Befehlsprozessor (122) eine Kombination von Datensätzen (129) von asynchronen Ereignissen anzuzeigen, die dem Datensatz (125) von erwarteten Ereignissen zugeordnet sind, und der Befehlsprozessor (122) eingerichtet ist, um den entsprechenden Datensatz (123) von bedingten Befehlen derart als erfüllt zu markieren, dass er anschließend ausgeführt werden kann.

4. Befehlsverarbeitungssystem nach einem der vorhergehenden Ansprüche, wobei der Befehlsprozessor (122) einen Generator (302) von erwarteten Ereignissen umfasst, der eingerichtet ist, um Ereignisdatensätze (125) einschließlich bedingter Parameter zu erstellen, die nur berücksichtigt werden sollen, sobald andere Ereignisse aufgetreten sind, die anderen spezifizierten Parametern zugeordnet sind, und der Befehlsprozessor (122) ein Konfigurationsmodul (304) des adaptiven Baums umfasst, das eingerichtet ist, um den adaptiven Baum (246) nur mit den bedingten Parametern zu konfigurieren, sobald die spezifizierten bedingten Ereignisse aufgetreten sind, die zu diesen Parametern gehören.

5. Befehlsverarbeitungssystem nach einem der vorhergehenden Ansprüche, wobei der Befehlsprozessor (122) einen Befehlsdekonstruktor (300) umfasst, der eingerichtet ist, um einen Datensatz (123) von bedingten Befehlen in mehrere unterschiedliche Unteraktionen zu dekonstruieren, die vorgenommen werden sollen, um diesen Befehl auszuführen und um für wenigstens eine dieser ausgewählten Unteraktionen Parameter zu bestimmen, die sich auf erwartete Ereignisse beziehen, die verwendet werden sollen, um einen entsprechenden Datensatz (125) von erwarteten Ereignissen zu erzeugen.

6. Befehlsverarbeitungssystem nach Anspruch 5, wobei der Befehlsprozessor ferner eine Befehlsausführungs-Engine (306) umfasst und der Befehlsdekonstruktor (300) eingerichtet ist, um eine Teilmenge der unterschiedlichen Unteraktionen des Befehlsdatensatzes (123) an die Befehlsausführungs-Engine (306) weiterzuleiten, um vor dem Zuordnen des Datensatzes (125) von erwarteten Ereignissen unbedingt ausgeführt zu werden.

7. Befehlsverarbeitungssystem nach einem der vorhergehenden Ansprüche, wobei der Befehlsprozessor (122) einen Generator (302) von erwarteten Ereignissen umfasst, der eingerichtet ist, um Datensätze (125) von erwarteten Ereignissen einschließlich bedingter Parameter zu erstellen, die nur berücksichtigt werden sollen, sobald andere Ereignisse auftreten, die anderen spezifizierten Parametern zugeordnet sind, und der Befehlsprozessor (122) ein Konfigurationsmodul (304) des adaptiven Baums umfasst, das eingerichtet ist, um den adaptiven Baum (246) nur mit den bedingten Parametern zu konfigurieren, sobald die spezifizierten bedingten Ereignisse aufgetreten sind, die zu diesen Parametern gehören.

8. Befehlsverarbeitungssystem nach Anspruch 7, das ferner einen Datenspeicher (126) für Datensätze von erwarteten Ereignissen zum Speichern von Datensätzen (125) von erwarteten Ereignissen umfasst, die durch den Generator (302) von erwarteten Ereignissen erstellt wurden.

9. Befehlsverarbeitungssystem nach einem der vorhergehenden Ansprüche, wobei der adaptive Baum (246) eingerichtet ist, um gemäß einem aktuellen bedingten Zustand der Datensätze (125) von bedingten Ereignissen konfiguriert zu werden, die zugeordnet werden, und um zu einer unterschiedlichen Konfiguration zu wechseln, falls einige zuvor bestimmte Parameter der Datensätze (125) von bedingten Ereignissen Datensätzen (129) von asynchronen Ereignissen zugeordnet wurden, die den bedingten Zustand der Datensätze (125) von bedingten Ereignissen verändern.

10. Befehlsverarbeitungssystem nach einem der vorhergehenden Ansprüche, wobei die mehreren Verarbeitungsressourcen (242) aus mehreren zuteilbaren Verarbeitungsressourcenkanälen (244A, 244B, 244C, 244D) bestehen, die jeweils konfiguriert sind, um abhängig von der Konfiguration, die durch das Ressourcenzuweisungsnetzwerk (240) bestimmt wird, zu- oder ausgeschaltet zu werden.

11. Verfahren zum kontinuierlichen Verarbeiten von Datensätzen (123) von bedingten Befehlen in Echtzeit, wobei jeder Datensatz von bedingten Befehlen einen oder mehrere verknüpfte Datensätze (129) von asynchronen Ereignissen aufweist, die empfangen werden müssen, damit ein Befehl des Datensatzes (123) von bedingten Befehlen ausgeführt wird, wobei das Verfahren Folgendes umfasst:
Empfangen mehrerer Datensätze (129) von asynchronen Ereignissen von Systemen (26A, 26B, 26C) über ein externes Kommunikationsnetzwerk (16) und eine Wiederverwendungs-Engine (132) und temporäres Speichern derselben in einem adaptiven Warteschlangensystem (130), das eine Warteschlange (202) und ein Warteschlangenverwaltungsmodul (200) umfasst, wobei ein Warteschlangenaktualisierungsmodul (206) des Warteschlangenverwaltungsmoduls (200) die Datensätze von asynchronen Ereignissen empfängt und die Warteschlange (202) auf eine First-ln-First-Out(FIFO)-Weise bestückt, wobei jeder Datensatz (129) von asynchronen Ereignissen zu einem Ereignis gehört, das asynchron zu der Erzeugung des verknüpften Datensatzes (123) von bedingten Befehlen auftritt, auf den sich der Datensatz von asynchronen Ereignissen bezieht;
Überwachen der Länge der Warteschlange von Datensätzen von asynchronen Ereignissen und Bereitstellen von Warteschlangenlängeninformationen (205) für die anschließende Verarbeitung;
Empfangen eines Datensatzes (123) von bedingten Befehlen, der mehrere Parameter aufweist;
Erzeugen eines Datensatzes (125) von erwarteten Ereignissen unter Verwendung wenigstens einiger der Parameter (136, 138) des empfangenen Datensatzes (123) von bedingten Befehlen, wobei der Datensatz (125) von erwarteten Ereignissen statische Parameter (136), die im Laufe der Verarbeitung des Datensatzes (123) von bedingten Befehlen statisch bleiben, und variable Parameter (138) umfasst, die während der Verarbeitung des Datensatzes (123) von bedingten Befehlen variieren können;
Verarbeiten jedes der empfangenen Datensätze (129) von asynchronen Ereignissen, um zu bestimmen, ob sie beliebigen der empfangenen Datensätze (123) von bedingten Befehlen entsprechen; wobei der Verarbeitungsschritt Folgendes umfasst:
Einrichten eines Ressourcenzuweisungsnetzwerks (240), um auf eine proportionale Menge der verfügbaren Verarbeitungsressourcen (242) mehrerer Verarbeitungsressourcen (242) zuzugreifen, die parallel in Betrieb sind, unter Verwendung der Größe der Warteschlange (202) wie durch die Warteschlangenlängeninformationen (205) bestimmt, wobei die Datensätze (129) von asynchronen Ereignissen durch ein Warteschlangenauslesemodul (208) des Warteschlangenverwaltungsmoduls (200) an das Ressourcenzuweisungsnetzwerk (240) ausgelesen werden; und
Verwenden einer Datenstruktur (246) des adaptiven Logikbaums, die eingerichtet ist, um durch die Verarbeitungsressourcen (242) gleichzeitig verwendet zu werden, zum Zuordnen der mehreren empfangenen Datensätze (129) von asynchronen Ereignissen zu den Parametern jedes der Datensätze (125) von erwarteten Ereignissen, wobei die Datenstruktur (246) des adaptiven Logikbaums mehrere Knoten umfasst, einschließlich wenigstens eines statischen Knotens, der einen statischen Parameter (136) eines Datensatzes (125) von erwarteten Ereignissen darstellt, und wenigstens eines variablen Knotens, der einen variablen Parameter (138) eines Datensatzes (125) von erwarteten Ereignissen darstellt;
Bestimmen der Ergebnisse eines Parsings des Datensatzes (129) von asynchronen Ereignissen des adaptiven Logikbaums (246);
Referenzieren und Protokollieren der Verarbeitung eines Datensatzes von asynchronen Ereignissen durch den adaptiven Logikbaum (246) und Speichern der Ergebnisse in einem Zuordnungsverlaufsdatenspeicher (250);
Anzeigen an den Befehlsprozessor (122), ob die Ereignisse aufgetreten sind, die durch beliebige Datensätze (125) von erwarteten Ereignissen spezifiziert sind, wie durch das Vorhandensein eines oder mehrerer korrekt zugeordneter Datensätze (129) von asynchronen Ereignissen bestimmt; und
Wiederverwenden beliebiger Datensätze (129) von asynchronen Ereignissen, von denen unter Verwendung der Struktur (246) des adaptiven Baums bestimmt wurde, dass sie zu einem aktuellen Zeitpunkt unter Verwendung der Wiederverwendungs-Engine (132) nicht einem Datensatz (125) von erwarteten Ereignissen zugeordnet sind, wobei der Wiederverwendungsschritt das Platzieren des Datensatzes (129) von asynchronen Ereignissen zurück in das adaptive Warteschlangensystem (130) umfasst;
Bestimmen, nach Empfang eines Datensatzes (129) von asynchronen Ereignissen für die Verarbeitung, ob der Datensatz (129) von asynchronen Ereignissen zu einem wiederverwendeten Datensatz (129) von asynchronen Ereignissen gehört und wo bestimmt wird, dass dies der Fall ist, Abrufen von Ergebnissen aus dem Zuordnungsverlaufsdatenspeicher, die sich auf den wiederverwendeten Datensatz (129) von asynchronen Ereignissen beziehen, und Konfigurieren der Datenstruktur (246) des adaptiven Logikbaums gemäß den abgerufenen Ergebnissen;
wobei das Verfahren fortlaufend Datensätze (125) von erwarteten Ereignissen erstellt, während Datensätze (123) von bedingten Befehlen empfangen werden, und diese kontinuierlich zu Datensätzen (129) von asynchronen Ereignissen zuordnet, die in dem System vorhanden sind, die nicht den Datensätzen von erwarteten Ereignissen zugeordnet wurden.

## Revendications

1. Système de traitement d'instructions basées sur des événements asynchrones (120) destiné à traiter des enregistrements d'instructions conditionnelles (123) en continu en temps réel, chaque enregistrement d'instruction conditionnelle ayant un ou plusieurs enregistrements d'événements asynchrones (129) associés, qui doivent être reçus par le système pour une instruction de l'enregistrement d'instruction conditionnelle (123) à exécuter, le système comprenant :
un système de mise en file d'attente adaptatif (130) destiné à recevoir une pluralité d'enregistrements d'événements asynchrones (129) et à les stocker temporairement dans une file d'attente (202), chaque enregistrement d'événement asynchrone (129) se rapportant à un événement se produisant de manière asynchrone par rapport à la génération de l'enregistrement d'instruction conditionnelle (123) associé auquel se rapporte l'enregistrement d'événement asynchrone, le système de mise en file d'attente adaptatif (130) comprenant un module de surveillance de longueur de file d'attente (204) destiné à surveiller la longueur de la file d'attente d'enregistrements d'événements asynchrones et à fournir des informations de longueur de file d'attente (205) à un processeur de mise en correspondance d'événements (128), et un module de gestion de file d'attente (200) ;
un processeur d'instructions (122) destiné à recevoir un enregistrement d'instruction conditionnelle (123) ayant une pluralité de paramètres, le processeur d'instructions étant agencé pour générer un enregistrement d'événement attendu (125) à l'aide d'au moins certains des paramètres (136, 138) de l'enregistrement d'instruction conditionnelle (123) reçu, l'enregistrement d'événement attendu (125) comprenant des paramètres statiques (136) qui restent statiques tout au long du traitement de l'enregistrement d'instruction conditionnelle (123) et des paramètres variables (138) qui peuvent varier pendant le traitement de l'enregistrement d'instruction conditionnelle (123) ;
le processeur de mise en correspondance d'événements (128) destiné à traiter chacun des enregistrements d'événements asynchrones (129) reçus devant déterminer s'ils correspondent à l'un quelconque des enregistrements d'instructions conditionnelles (123) reçus ; le processeur de mise en correspondance d'événements (128) comprenant :
une pluralité de ressources de traitement (242) qui fonctionnent en parallèle et un réseau d'allocation de ressources (240), le réseau d'allocation de ressources étant agencé pour accéder à une quantité proportionnelle des ressources de traitement (242) disponibles en fonction de la taille de la file d'attente (202) telle que déterminée par les informations de longueur de file d'attente (205) ;
une structure de données d'arbre logique adaptatif (246) agencée pour être utilisée simultanément par les ressources de traitement (242) destinée à mettre en correspondance la pluralité d'enregistrements d'événements asynchrones (129) reçus avec les paramètres de chacun des enregistrements d'événements attendus (125), la structure de données d'arbre logique adaptatif (246) comprenant une pluralité de noeuds, y compris au moins un nœud statique représentant un paramètre statique (136) d'un enregistrement d'événement attendu (125) et au moins un nœud variable représentant un paramètre variable (138) d'un enregistrement d'événement attendu (125) ; un processeur de résultats (252) destiné à déterminer les résultats d'un enregistrement d'événement asynchrone (129) provenant de l'analyse de l'arbre logique adaptatif (246) ; et
un module d'historique de mise en correspondance (248) destiné à référencer et à consigner le traitement d'un enregistrement d'événement asynchrone dans l'arbre logique adaptatif (246) et à stocker les résultats dans une mémoire de données d'historique de mise en correspondance (250) ;
le processeur de mise en correspondance d'événements (128) étant agencé pour indiquer au processeur d'instructions (122) si les événements spécifiés par des enregistrements d'événements attendus (125) se sont produits tel que déterminé par la présence d'un ou de plusieurs enregistrements d'événements asynchrones (129) correctement mis en correspondance ; et
un moteur de recyclage (132) destiné à recycler tous les enregistrements d'événements asynchrones (129) qui ont été déterminés à l'aide de la structure d'arbre adaptatif (246) comme ne correspondant pas à un enregistrement d'événement attendu (125) à un moment actuel dans le temps, le moteur de recyclage plaçant l'enregistrement d'événement asynchrone (129) de nouveau dans le module de gestion de file d'attente (200) du système de mise en file d'attente adaptatif (130) ;
le processeur de résultats (252) étant configuré pour transmettre un résultat mis en correspondance au processeur d'instructions (122) ou un enregistrement d'événement asynchrone (129) sans correspondance au moteur de recyclage (132) ;
le module de gestion de file d'attente (200) du système de mise en file d'attente adaptatif (130) étant configuré pour gérer la mise à jour de la file d'attente (202) d'enregistrements d'événements asynchrones et pour lire une pluralité des enregistrements d'événements asynchrones (129) au processeur de mise en correspondance d'événements (128) sur demande et qui comprend :
un module de mise à jour de file d'attente (206) qui reçoit les enregistrements d'événements asynchrones (129) provenant de systèmes (26A, 26B, 26C) externes au système de traitement d'instructions basées sur des événements asynchrones (120) et qui reçoit des enregistrements d'événements asynchrones recyclés provenant du moteur de recyclage (132) à placer dans la file d'attente (202) et remplit la file d'attente (202) de manière premier entré, premier sorti (PEPS), et qui est configuré pour déterminer si un enregistrement d'événement asynchrone reçu provient du moteur de recyclage (132) ; et
un module de lecture de file d'attente (208) destiné à lire une pluralité d'enregistrements d'événements asynchrones simultanément au réseau d'allocation de ressources (240) du processeur de mise en correspondance d'événements (128) ;
la structure de données d'arbre logique adaptatif (246) étant configurée conformément aux résultats stockés dans la mémoire de données d'historique de mise en correspondance (250) lorsque le processeur de mise en correspondance d'événements (128) traite un enregistrement d'événement asynchrone (129) précédemment recyclé ; et
le système étant agencé pour créer en continu des enregistrements d'événements attendus (125) lorsque des enregistrements d'instructions conditionnelles (123) sont reçus et pour les mettre en correspondance en continu avec des enregistrements d'événements asynchrones (129) présents dans le système qui n'ont pas été mis en correspondance avec les enregistrements d'événements attendus.

2. Système de traitement d'instructions selon la revendication 1, dans lequel le processeur de résultats (252) est agencé pour chaque enregistrement d'événement asynchrone (129) qui échoue à être mis en correspondance avec un enregistrement d'événement attendu (125), pour accéder au module d'historique de mise en correspondance (248) et déterminer à l'aide des historiques stockés d'enregistrements d'événements asynchrones (129) ayant échoué précédemment, si une combinaison d'un enregistrement d'événement asynchrone (129) actuel et de l'un quelconque des enregistrements d'événements asynchrones (129) ayant échoué précédemment conduirait à une correspondance avec un enregistrement d'événement attendu (125).

3. Système de traitement d'instructions selon la revendication 2, dans lequel le processeur de résultats (252) est agencé pour indiquer au processeur d'instructions (122) une combinaison d'enregistrements d'événements asynchrones (129) qui correspondent à l'enregistrement d'événement attendu (125), et le processeur d'instructions (122) est agencé pour marquer l'enregistrement d'instruction conditionnelle (123) correspondant comme étant réalisé de sorte qu'il peut être exécuté ultérieurement.

4. Système de traitement d'instructions selon l'une quelconque des revendications précédentes, dans lequel le processeur d'instructions (122) comprend un générateur d'événements attendus (302) agencé pour créer des enregistrements d'événements (125) comportant des paramètres conditionnels qui ne doivent être considérés qu'une fois que d'autres événements correspondant à d'autres paramètres spécifiés se sont produits, et le processeur d'instructions (122) comprend un module de configuration d'arbre adaptatif (304) qui est agencé pour configurer l'arbre adaptatif (246) avec les paramètres conditionnels qu'une fois que les événements conditionnels spécifiés se rapportant à ces paramètres se sont produits.

5. Système de traitement d'instructions selon l'une quelconque des revendications précédentes, dans lequel le processeur d'instructions (122) comprend un déconstructeur d'instructions (300) qui est agencé pour déconstruire un enregistrement d'instruction conditionnelle (123) en une pluralité de sous-actions différentes qui doivent être mises en oeuvre pour exécuter cette instruction et, pour au moins une de ces sous-actions sélectionnées, déterminer des paramètres relatifs à des événements attendus à utiliser pour la génération d'un enregistrement d'événement attendu (125) correspondant.

6. Système de traitement d'instructions selon la revendication 5, dans lequel le processeur d'instructions comprend en outre un moteur d'exécution d'instructions (306) et le déconstructeur d'instructions (300) est agencé pour faire parvenir un sous-ensemble des différentes sous-actions de l'enregistrement d'instructions (123) au moteur d'exécution d'instructions (306) à exécuter sans condition avant la mise en correspondance de l'enregistrement d'événement attendu (125).

7. Système de traitement d'instructions selon l'une quelconque des revendications précédentes, dans lequel le processeur d'instructions (122) comprend un générateur d'événements attendus (302) agencé pour créer des enregistrements d'événements attendus (125) comportant des paramètres conditionnels qui ne doivent être considérés qu'une fois que d'autres événements correspondant à d'autres paramètres spécifiés se sont produits, et le processeur d'instructions (122) comprend un module de configuration d'arbre adaptatif (304) qui est agencé pour configurer l'arbre adaptatif (246) avec les paramètres conditionnels qu'une fois que les événements conditionnels spécifiés se rapportant à ces paramètres se sont produits.

8. Système de traitement d'instructions selon la revendication 7, comprenant en outre une mémoire de données d'enregistrement d'événements attendus (126) destinée à stocker des enregistrements d'événements attendus (125) créés par le générateur d'événements attendus (302).

9. Système de traitement d'instructions selon l'une quelconque des revendications précédentes, dans lequel l'arbre adaptatif (246) est agencé pour être configuré conformément à un état conditionnel actuel des enregistrements d'événements conditionnels (125) étant mis en correspondance, et pour passer à une configuration différente si certains paramètres prédéterminés des enregistrements d'événements conditionnels (125) ont été mis en correspondance avec des enregistrements d'événements asynchrones (129) qui modifient l'état conditionnel des enregistrements d'événements conditionnels (125).

10. Système de traitement d'instructions selon l'une quelconque des revendications précédentes, dans lequel la pluralité de ressources de traitement (242) sont constituées d'une pluralité de canaux de ressources de traitement attribuables (244A, 244B, 244C, 244D) qui sont chacun configurés pour être commutés en entrée ou en sortie en fonction de la configuration déterminée par le réseau d'allocation de ressources (240).

11. Procédé de traitement d'enregistrements d'instructions conditionnelles (123) en continu en temps réel, chaque enregistrement d'instruction conditionnelle ayant un ou plusieurs enregistrements d'événements asynchrones (129) associés, qui doivent être reçus pour une instruction de l'enregistrement d'instruction conditionnelle (123) à exécuter, le procédé comprenant :
la réception d'une pluralité d'enregistrements d'événements asynchrones (129) provenant de systèmes (26A, 26B, 26C) par l'intermédiaire d'un réseau de communication externe (16) et d'un moteur de recyclage (132) et leur stockage temporaire dans un système de mise en file d'attente adaptatif (130) qui comprend une file d'attente (202) et un module de gestion de file d'attente (200), un module de mise à jour de file d'attente (206) du module de gestion de file d'attente (200) recevant les enregistrements d'événements asynchrones et remplissant la file d'attente (202) de manière premier entré, premier sorti (PEPS), chaque enregistrement d'événement asynchrone (129) se rapportant à un événement se produisant de manière asynchrone par rapport à la génération de l'enregistrement d'instruction conditionnelle (123) associé auquel l'enregistrement d'événement asynchrone se rapporte ;
la surveillance de la longueur de la file d'attente d'enregistrements d'événements asynchrones et la fourniture d'informations de longueur de file d'attente (205) pour un traitement ultérieur ;
la réception d'un enregistrement d'instruction conditionnelle (123) ayant une pluralité de paramètres ;
la génération d'un enregistrement d'événement attendu (125) à l'aide d'au moins certains des paramètres (136, 138) de l'enregistrement d'instruction conditionnelle (123) reçu, l'enregistrement d'événement attendu (125) comprenant des paramètres statiques (136) qui restent statiques tout au long du traitement de l'enregistrement d'instruction conditionnelle (123) et des paramètres variables (138) qui peuvent varier pendant le traitement de l'enregistrement d'instruction conditionnelle (123) ;
le traitement de chacun des enregistrements d'événements asynchrones (129) reçus pour déterminer s'ils correspondent à l'un quelconque des enregistrements d'instructions conditionnelles (123) reçus ; l'étape de traitement comprenant :
l'agencement d'un réseau d'allocation de ressources (240) pour accéder à une quantité proportionnelle des ressources de traitement (242) disponibles d'une pluralité de ressources de traitement (242) qui fonctionnent en parallèle, à l'aide de la taille de la file d'attente (202) telle que déterminée par les informations de longueur de file d'attente (205), les enregistrements d'événements asynchrones (129) étant lus au réseau d'allocation de ressources (240) par un module de lecture de file d'attente (208) du module de gestion de file d'attente (200) ; et
l'utilisation d'une structure de données d'arbre logique adaptatif (246), agencée pour être utilisée simultanément par les ressources de traitement (242), destinée à mettre en correspondance la pluralité d'enregistrements d'événements asynchrones (129) reçus avec les paramètres de chacun des enregistrements d'événements attendus (125), la structure de données d'arbre logique adaptatif (246) comprenant une pluralité de noeuds, y compris au moins un nœud statique représentant un paramètre statique (136) d'un enregistrement d'événement attendu (125) et au moins un nœud variable représentant un paramètre variable (138) d'un enregistrement d'événement attendu (125) ;
la détermination des résultats d'une analyse d'enregistrement d'événement asynchrone (129) de l'arbre logique adaptatif (246) ;
le référencement et le fait de consigner le traitement d'un enregistrement d'événement asynchrone dans l'arbre logique adaptatif (246) et le stockage des résultats dans une mémoire de données d'historique de mise en correspondance (250) ;
l'indication, au processeur d'instructions (122), du fait de savoir si les événements spécifiés par l'un quelconque des enregistrements d'événements attendus (125) se sont produits tel que déterminé par la présence d'un ou de plusieurs enregistrements d'événements asynchrones (129) correctement mis en correspondance ; et
le recyclage de tous les enregistrements d'événements asynchrones (129) qui ont été déterminés à l'aide de la structure d'arbre adaptatif (246) comme n'étant pas mis en correspondance avec un enregistrement d'événement attendu (125) à un moment actuel dans le temps à l'aide du moteur de recyclage (132), l'étape de recyclage plaçant l'enregistrement d'événement asynchrone (129) de nouveau dans le système de mise en file d'attente adaptatif (130) ;
la détermination, lors de la réception d'un enregistrement d'événement asynchrone (129) devant être traité, du fait de savoir si l'enregistrement d'événement asynchrone (129) se rapporte à un enregistrement d'événement asynchrone (129) recyclé et, lorsqu'il est déterminé qu'il s'y rapporte, la récupération de résultats provenant de la mémoire de données d'historique de mise en correspondance concernant l'enregistrement d'événement asynchrone (129) recyclé et la configuration de la structure de données d'arbre logique adaptatif (246) conformément aux résultats récupérés ;
le procédé créant en continu des enregistrements d'événements attendus (125) lorsque des enregistrements d'instructions conditionnelles (123) sont reçus et les mettant en correspondance en continu avec des enregistrements d'événements asynchrones (129) présents dans le système qui n'ont pas été mis en correspondance avec les enregistrements d'événements attendus.
